# EUROPEAN PATENT APPLICATION

(11) **EP 4 412 278 A1**
(43) Date of publication of application: **07.08.2024**
(21) Application number: 21959426.4
(22) Date of filing: 30.09.2021
(51) Int. Cl.: H04W 16/28

(54) **TERMINAL, WIRELESS COMMUNICATION METHOD AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); SUN, Weiqi, Beijing 100190 (CN); WANG, Jing, Beijing 100190 (CN); PI, Qiping, Beijing 100190 (CN); CHEN, Lan, Beijing 100190 (CN)
(74) Representative: Hoffmann Eitle
(86) International application number: PCT/JP2021/036252
(87) International publication number: WO 2023/053391

(57) **Abstract**

A terminal according to one aspect of the present disclosure includes a receiving section that receives a downlink control channel for transmitting downlink control information for scheduling a plurality of downlink shared channels, and a control section that, when a plurality of control resource set pool indices corresponding to the downlink control channel are configured, judges at least one of a quasi-co-location (QCL) and a TCI state corresponding to the plurality of respective downlink shared channels, based on whether offset between the downlink control channel and at least one of the plurality of downlink shared channels is less than a certain threshold value.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that one or a plurality of transmission/reception points (TRPs) (multi-TRP) perform DL transmission (for example, downlink shared channel (for example, PDSCH) transmission) to a terminal (user terminal, User Equipment (UE)) by using one or a plurality of panels (multi-panel) .

For NR, it is also assumed that one or a plurality of transmission/reception points perform transmission/reception of a plurality of signals/channels (for example, multi-PDSCH). For example, it is conceivable that one or more transmission/reception points control multi-PDSCH transmission by using one or a plurality of pieces of downlink control information (for example, DCI) / downlink control channels (for example, PDCCHs).

However, for NR specifications thus far, a study has not been sufficiently performed with respect to how to control a plurality of DL transmissions from one or more TRPs.

Thus, an object of the present disclosure is to provide a terminal, a radio communication method, and a base station that can appropriately perform communication even when one or more TRPs perform a plurality of DL transmissions.

### Solution to Problem

A terminal according to one aspect of the present disclosure includes a receiving section that receives a downlink control channel for transmitting downlink control information for scheduling a plurality of downlink shared channels, and a control section that, when a plurality of control resource set pool indices corresponding to the downlink control channel are configured, judges at least one of a quasi-co-location (QCL) and a TCI state corresponding to the plurality of respective downlink shared channels, based on whether offset between the downlink control channel and at least one of the plurality of downlink shared channels is less than a certain threshold value.

### Advantageous Effects of Invention

According to one aspect of the present disclosure, it is possible to appropriately perform communication even when one or more TRPs perform a plurality of DL transmissions.

### Brief Description of Drawings

[FIG. 1] FIG. 1 is a diagram to show an example of physical shared channel scheduling control based on a PDCCH/DCI.
[FIG. 2] FIGS. 2A to 2D are diagrams to show examples of a multi-TRP scenario.
[FIG. 3] FIG. 3 is a diagram to show an example of scheduling offset between a PDCCH and a PDSCH.
[FIG. 4] FIG. 4 is a diagram to show another example of the scheduling offset between the PDCCH and the PDSCH.
[FIG. 5] FIG. 5 is a diagram to show an example of scheduling offset between a PDCCH and multi-PDSCH.
[FIG. 6] FIG. 6 is a diagram to show an example of a QCL / TCI state applied to multi-PDSCH in the present embodiment.
[FIG. 7] FIGS. 7A and 7B are diagrams to show other examples of the QCL / TCI state applied to the multi-PDSCH in the present embodiment.
[FIG. 8] FIGS. 8A and 8B are diagrams to show other examples of the QCL / TCI state applied to the multi-PDSCH in the present embodiment.
[FIG. 9] FIG. 9 is a diagram to show cases of combinations of PDCCH types/configurations and multi-PDSCH types/configurations.
[FIG. 10] FIG. 10 is a diagram to show an example of case 1 in the present embodiment.
[FIG. 11] FIG. 11 is a diagram to show an example of case 2 / case 3 in the present embodiment.
[FIG. 12] FIG. 12 is a diagram to show an example of a QCL / TCI state applied to multi-PDSCH in case 1 / case 2 / case 3 in the present embodiment.
[FIG. 13] FIGS. 13A and 13B are diagrams to show other examples of the QCL / TCI state applied to the multi-PDSCH in case 1 / case 2 / case 3 in the present embodiment.
[FIG. 14] FIGS. 14A and 14B are diagrams to show other examples of the QCL / TCI state applied to the multi-PDSCH in case 1 / case 2 / case 3 in the present embodiment.
[FIG. 15] FIG. 15 is a diagram to show an example of case 4 in the present embodiment.
[FIG. 16] FIG. 16 is a diagram to show an example of case 5 in the present embodiment.
[FIG. 17] FIG. 17 is a diagram to show an example of case 6 in the present embodiment.
[FIG. 18] FIG. 18 is a diagram to show an example of case 7 / case 8 in the present embodiment.
[FIG. 19] FIG. 19 is a diagram to show an example of a QCL / TCI state applied to multi-PDSCH in case 6 / case 7 / case 8 in the present embodiment.
[FIG. 20] FIGS. 20A and 20B are diagrams to show other examples of the QCL / TCI state applied to the multi-PDSCH in case 6 / case 7 / case 8 in the present embodiment.
[FIG. 21] FIGS. 21A and 21B are diagrams to show other examples of the QCL / TCI state applied to the multi-PDSCH in case 6 / case 7 / case 8 in the present embodiment.
[FIG. 22] FIGS. 22A and 22B are diagrams to show examples of case 9-1 / case 9-2 in the present embodiment.
[FIG. 23] FIG. 23 is a diagram to show an example of case 10 in the present embodiment.
[FIG. 24] FIG. 24 is a diagram to show an example of case 11 in the present embodiment.
[FIG. 25] FIG. 25 is a diagram to show an example of case 12 / case 13 in the present embodiment.
[FIG. 26] FIG. 26 is a diagram to show an example of a QCL / TCI state applied to multi-PDSCH in case 11 / case 12 / case 13 in the present embodiment.
[FIG. 27] FIGS. 27A and 27B are diagrams to show other examples of the QCL / TCI state applied to the multi-PDSCH in case 11 / case 12 / case 13 in the present embodiment.
[FIG. 28] FIGS. 28A and 28B are diagrams to show other examples of the QCL / TCI state applied to the multi-PDSCH in case 11 / case 12 / case 13 in the present embodiment.
[FIG. 29] FIG. 29 is a diagram to show an example of a schematic structure of a radio communication system according to one embodiment.
[FIG. 30] FIG. 30 is a diagram to show an example of a structure of a base station according to one embodiment.
[FIG. 31] FIG. 31 is a diagram to show an example of a structure of a user terminal according to one embodiment.
[FIG. 32] FIG. 32 is a diagram to show an example of a hardware structure of the base station and the user terminal according to one embodiment.
[FIG. 33] FIG. 33 is a diagram to show an example of a vehicle according to one embodiment.

### Description of Embodiments

### (TCI, Spatial Relation, QCL)

For NR, it is studied that reception processing (for example, at least one of reception, demapping, demodulation, and decoding) and transmission processing (for example, at least one of transmission, mapping, precoding, modulation, and coding), in a UE, of at least one of a signal and a channel (which is expressed as a signal/channel) are controlled based on a transmission configuration indication state (TCI state).

The TCI state may be a state applied to a downlink signal/channel. A state that corresponds to the TCI state applied to an uplink signal/channel may be expressed as a spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Default TCI State)

In Rel. 16, the PDSCH may be scheduled by DCI having a TCI field. A TCI state for the PDSCH is indicated by the TCI field. The TCI field in DCI format 1-1 is 3 bits, and the TCI field in DCI format 1-2 is up to 3 bits.

In an RRC connected mode, if a first TCI-in-DCI information element (higher layer parameter "tci-PresentInDCI") is set to "enabled" for a CORESET for scheduling the PDSCH, the UE assumes that the TCI field is present in DCI format 1_1 for a PDCCH transmitted in the CORESET.

If a second TCI-in-DCI information element (higher layer parameter "tci-PresentInDCI-1-2") for a CORESET for scheduling the PDSCH is configured for the UE, the UE assumes that the TCI field having a DCI field size indicated by the second TCI-in-DCI information element is present in DCI format 1_2 for a PDSCH transmitted in the CORESET.

In Rel. 16, the PDSCH may be scheduled by DCI not having the TCI field. A DCI format of the DCI may be DCI format 1_0 or DCI format 1_1/1_2 in a case where a TCI-in-DCI information element (higher layer parameter "tci-PresentInDCI" or "tci-PresentInDCI-1-2") is not configured (enabled). When the PDSCH is scheduled by the DCI not having the TCI field and if time offset between reception of DL DCI (DCI for scheduling a PDSCH (scheduling DCI)) and a corresponding PDSCH (PDSCH scheduled by the DCI) is greater than or equal to a threshold value (timeDurationForQCL), the UE assumes that a TCI state or QCL assumption for the PDSCH is the same as a TCI state or QCL assumption (default TCI state) for the CORESET (for example, the scheduling DCI).

In an RRC connected mode, in both a case where a TCI-in-DCI information element (higher layer parameters "tci-PresentInDCI" and "tci-PresentInDCI-1-2") is set to "enabled" and a case where the TCI-in-DCI information element is not configured, when time offset between reception of DL DCI (DCI for scheduling a PDSCH) and a corresponding PDSCH (PDSCH scheduled by the DCI) is less than a certain threshold value (timeDurationForQCL) (application condition, first condition), a TCI state (default TCI state) for the PDSCH may, in a case of non-cross carrier scheduling, be a TCI state with the lowest CORESET ID in the latest slot in an active DL BWP of that CC (for a specific UL signal). Otherwise, the TCI state (default TCI state) for the PDSCH may be a TCI state with the lowest TCI state ID for a PDSCH in an active DL BWP of a CC to be scheduled.

The above certain threshold value may be referred to as a time length (time duration) for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold value, a scheduling offset threshold value, or the like. The above threshold value may be reported by the UE as a UE capability (for each subcarrier spacing).

When offset between reception of DL DCI and a PDSCH corresponding to the DL DCI is less than a threshold value "timeDurationForQCL," at least one TCI state configured for a serving cell with a scheduled PDSCH includes "QCL type D," the UE is configured with an information element for enabling 2 default TCIs (enableTwoDefaultTCIStates-r16), and at least one TCI codepoint (codepoint of a TCI field in the DL DCI) indicates two TCI states, the UE assumes that a DMRS port for the PDSCH or PDSCH transmission occasion in the serving cell is QCLed (quasi co-located) with an RS related to a QCL parameter associated with two TCI states corresponding to the lowest codepoint of TCI codepoints including two different TCI states (2 default QCL assumption determination rule). The information element for enabling 2 default TCIs indicates that Rel-16 operation with two default TCI states for a PDSCH in a case where at least one TCI codepoint is mapped to two TCI states is enabled.

As a default TCI state of a PDSCH in Rel. 15/16, specifications of a default TCI state for single TRP, a default TCI state for multi-DCI-based multi-TRP, and a default TCI state for single DCI-based multi-TRP are drafted.

### <Time Domain Resource Allocation>

In existing systems (for example, Rel. 15), downlink control information (DCI) includes information about time domain resource allocation for a physical shared channel (at least one of a PDSCH and a PUSCH). A network (for example, a base station) notifies, by using a certain field (for example, a TDRA field) included in the DCI, a UE of information related to a time domain resource in which the physical shared channel scheduled by the DCI is scheduled.

The information related to the time domain resource may include, for example, at least one of information indicating offset between the DCI and the physical shared channel (for example, slot offset K0), information indicating a start symbol (for example, start symbol S), and information indicating a length of the physical shared channel (for example, length L).

Respective pieces of bit information (or codepoints) notified by the TDRA field may be associated with different time domain resource allocation candidates (or entries). For example, a table in which the respective pieces of bit information and the time domain resource allocation candidates (K0, S, and L) are associated with each other (for example, a TDRA table) may be defined. The time domain resource allocation candidates may be predefined in a specification, or may be notified to / configured for the UE by higher layer signaling.

### {PDSCH}

The UE may determine a row index (entry number or entry index) in a certain table, based on a value of a TDRA field in DCI (for example, DCI format 1_0/1_1/1_2). The certain table may include at least one of information indicating time offset (for example, slot offset KO) between the DCI and a PDSCH scheduled by the DCI, information indicating a mapping type of the PDSCH, start symbol S of the PDSCH, and time length L of the PDSCH. A combination of start symbol S and time length L of the PDSCH may be referred to as a Start and Length Indicator (SLIV).

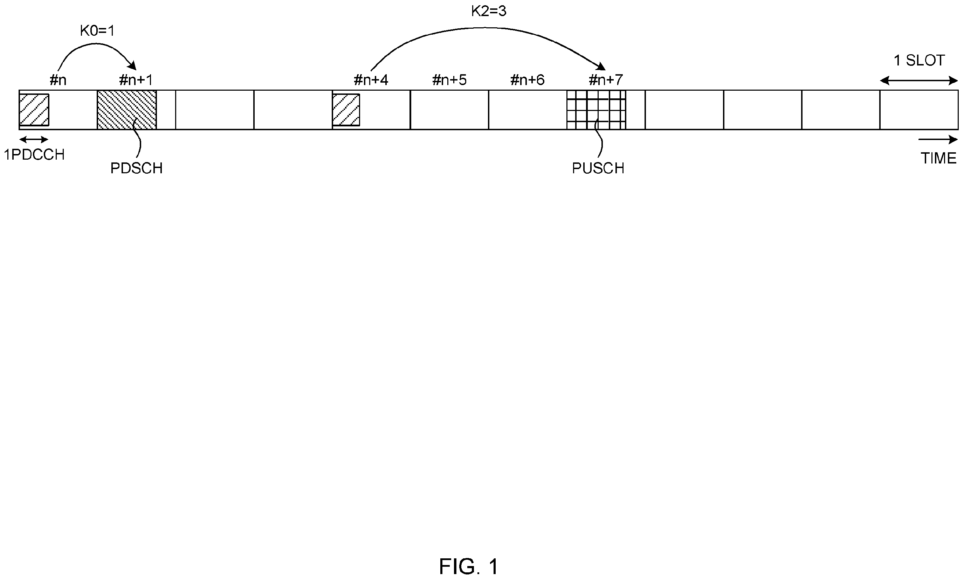

The UE may determine a time domain resource in which the PDSCH is scheduled, based on at least one of a value of a certain field included in the DCI, information about slot offset K0 defined in the table, the mapping type, start symbol S, symbol length L, and the SLIV (see FIG. 1). Note that a reference point of start symbol S and symbol length L may be controlled based on a start location of a slot (head symbol). Start symbol S, symbol length L, and the like may be defined depending on the mapping type of the PDSCH.

As shown in FIG. 1, the UE judges, by using the DCI (or PDCCH used for transmission of the DCI) as the reference point in a time domain, a slot in which the PDSCH is scheduled. For example, the UE may, when receiving the DCI for scheduling the PDSCH in slot #n, determine a slot (allocated for the PDSCH) for receiving the PDSCH, based on at least one of number n of the slot, subcarrier spacing for the PDSCH µ_{PDSCH}, subcarrier spacing for the PDCCH µ_{PDCCH}, and time offset K0 described above. FIG. 1 shows a case where slot offset K0 = 1 and the subcarrier spacing for the PDSCH and the subcarrier spacing for the PDCCH are the same.

For resource allocation information (for example, SLIV) indicated by the TDRA field, the UE determines allocation for the PDSCH by using, as a reference, a start point of a slot to which the PDSCH is allocated. Note that the reference point may be referred to as a reference location.

### {PUSCH}

The UE may determine a row index (entry number or entry index) in a certain table, based on a value of a TDRA field in DCI (for example, DCI format 0_0/0_1/0_2). The certain table may include at least one of information indicating time offset (for example, slot offset K2) between the DCI and a PUSCH scheduled by the DCI, information indicating a mapping type of the PUSCH, start symbol S of the PUSCH, and time length L of the PUSCH. A combination of start symbol S and time length L of the PUSCH may be referred to as a Start and Length Indicator (SLIV).

The UE may determine a time domain resource in which the PUSCH is scheduled, based on at least one of a value of a certain field included in the DCI, information about slot offset K2 defined in the table, the mapping type, start symbol S, symbol length L, and the SLIV (see FIG. 1). Note that a reference point of start symbol S and symbol length L may be controlled based on a start location of a slot (head symbol). Start symbol S, symbol length L, and the like may be defined depending on the mapping type of the PDSCH.

As shown in FIG. 1, the UE judges, by using the DCI (or PDCCH used for transmission of the DCI) as the reference point in a time domain, a slot in which the PUSCH is scheduled. For example, the UE may, when receiving the DCI for scheduling the PUSCH in slot #n+4, determine a slot (allocated for the PUSCH) for transmitting the PUSCH, based on at least one of number n+4 of the slot, subcarrier spacing for the PUSCH µ_{PDSCH}, subcarrier spacing for the PUCCH µ_{PDCCH}, and time offset K2 described above. FIG. 1 shows a case where slot offset K2 = 3 and the subcarrier spacing for the PDSCH and the subcarrier spacing for the PDCCH are the same.

For resource allocation information (for example, SLIV) indicated by the TDRA field, the UE determines allocation for the PUSCH by using, as a reference, a start point of a slot to which the PUSCH is allocated.

### (Multi-TRP / Multi-PDSCH)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same cell identifier (ID), or may correspond to different cell IDs. The cell ID may be a physical cell ID or a virtual cell ID.

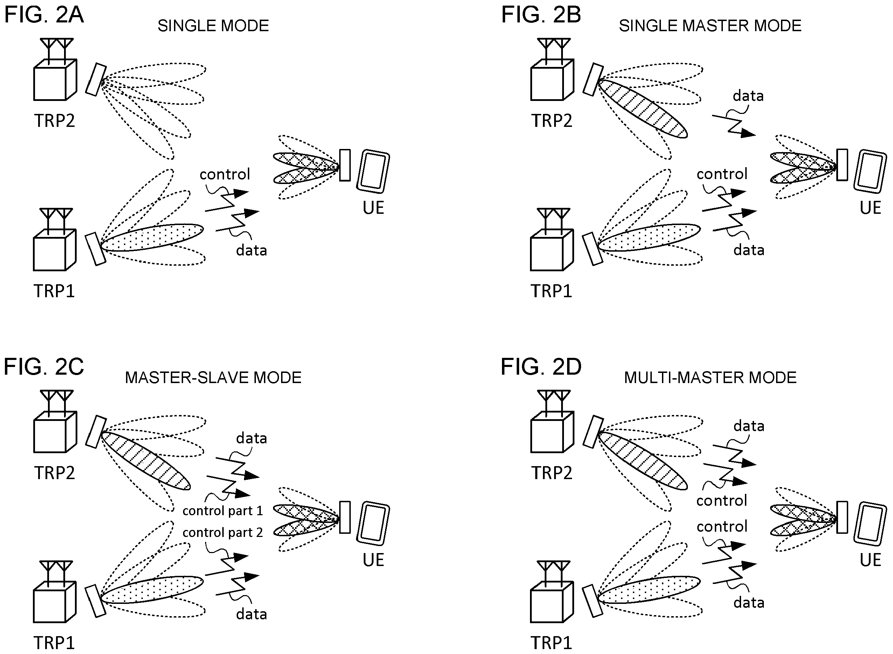

FIGS. 2A to 2D are diagrams to show examples of a multi-TRP scenario. In these examples, it is assumed that each TRP can transmit four different beams, but this is not restrictive.

FIG. 2A shows an example of a case where only one TRP (in the present example, TRP 1) of the multi-TRP performs transmission to the UE (which may be referred to as a single mode, a single TRP, or the like). In this case, TRP 1 transmits, to the UE, both a control signal (PDCCH) and a data signal (PDSCH).

FIG. 2B shows an example of a case where only one TRP (in the present example, TRP 1) of the multi-TRP transmits a control signal to the UE and where the multi-TRP transmits data signals (which may be referred to as a single master mode). The UE receives, based on one piece of downlink control information (DCI), respective PDSCHs transmitted from the multi-TRP.

FIG. 2C shows an example of a case where each of the multi-TRP transmits part of a control signal to the UE, and the multi-TRP transmits data signals (which may be referred to as a master slave mode). Part 1 of the control signal (DCI) may be transmitted in TRP 1, and part 2 of the control signal (DCI) may be transmitted in TRP 2. Part 2 of the control signal may depend on part 1. The UE receives, based on these parts of the DCI, respective PDSCHs transmitted from the multi-TRP.

FIG. 2D shows an example of a case where each of the multi-TRP transmits a separate control signal to the UE, and the multi-TRP transmits data signals (which may be referred to as a multi-master mode). A first control signal (DCI) may be transmitted in TRP 1, and a second control signal (DCI) may be transmitted in TRP 2. The UE receives, based on these pieces of DCI, respective PDSCHs transmitted from the multi-TRP.

When such plurality of PDSCHs (which may be referred to as multi-PDSCH (multiple PDSCHs)) from the multi-TRP as that shown in FIG. 2B are scheduled by using one piece of DCI, the DCI may be referred to as single DCI (S-DCI, single PDCCH). When such plurality of PDSCHs from the multi-TRP as that shown in FIG. 2D are scheduled by using a plurality of respective pieces of DCI, the plurality of pieces of DCI may be referred to as multi-DCI (M-DCI, multi-PDCCH (multiple PDCCHs)).

From each TRP of the multi-TRP, a different codeword (CW) and a different layer may be transmitted. As one form of the multi-TRP transmission, non-coherent joint transmission (NCJT) is under study.

In NCJT, for example, TRP 1 performs modulation mapping on a first codeword, performs layer mapping, and transmits a first PDSCH in a first number of layers (for example, two layers) by using first precoding. TRP 2 performs modulation mapping on a second codeword, performs layer mapping, and transmits a second PDSCH in a second number of layers (for example, two layers) by using second precoding.

Note that a plurality of PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

For URLLC for multi-TRP, it is studied that PDSCH (transport block (TB) or codeword (CW)) repetition over multi-TRP is supported. It is studied that a scheme for repetition over multi-TRP on a frequency domain, a layer (space) domain, or a time domain (URLLC schemes, for example, schemes 1, 2a, 2b, 3, and 4) is supported. In scheme 1, multi-PDSCH from multi-TRP is space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP is time division multiplexed (TDMed). In scheme 3, multi-PDSCH from multi-TRP is transmitted in one slot. In scheme 4, multi-PDSCH from multi-TRP is transmitted in different slots.

According to such a multi-TRP scenario, more flexible transmission control using a high quality channel is possible.

There is a possibility that NCJT using multi-TRP / multi-panel uses a high rank. For supporting ideal and non-ideal backhaul between a plurality of TRPs, both single DCI (single PDCCH, for example, FIG. 2B) and multi-DCI (multi-PDCCH, for example, FIG. 2D) may be supported. For both of the single DCI and the multi-DCI, a maximum number of TRPs may be 2.

For single PDCCH design (for ideal backhaul, mainly), TCI enhancement is under study. Each TCI codepoint in DCI may correspond to one or two TCI states. A TCI field size may be the same as that in Rel. 15.

### (SFN PDCCH)

With respect to a PDCCH/CORESET defined in Rel. 15, one TCI state without a CORESET pool index (CORESETPoolIndex) (which may be referred to as TRP information (TRP Info)) is configured for one CORESET.

With respect to enhancement of a PDCCH/CORESET defined in Rel. 16, a CORESET pool index is configured for each CORESET in multi-DCI-based multi-TRP.

For Rel. 17 (or later versions), enhancement 1 and enhancement 2 below related to a PDCCH/CORESET are under study.

In a case where a plurality of antennas (small antennas, transmission/reception points) having the same cell ID form a single frequency network (SFN), up to two TCI states can be configured/activated for one CORESET by using higher layer signaling (RRC signaling / MAC CE) (enhancement 1). The SFN contributes to at least one of management and reliability enhancement of an HST (high speed train).

In PDCCH repetition transmission (which may be simply referred to as "repetition"), two PDCCH candidates in two search space sets are linked to each other, and each search space set is associated with a corresponding CORESET (enhancement 2). The two search space sets may be associated with the same CORESET or different CORESETs. One (up to one) TCI state can be configured/activated for one CORESET by using higher layer signaling (RRC signaling / MAC CE).

If the two search space sets are associated with different CORESETs having different TCI states, the transmission may mean multi-TRP repetition transmission. If the two search space sets are associated with the same CORESET (CORESETs with the same TCI states), the transmission may mean single-TRP repetition transmission.

In Rel. 17 (or later versions), it is assumed that multi-PDSCH scheduled by single DCI is supported in a certain frequency range (for example, B52.6 (FR2-2)). In this case, how to configure a QCL / TCI state (for example, a default QCL / TCI state) of the multi-PDSCH is an issue.

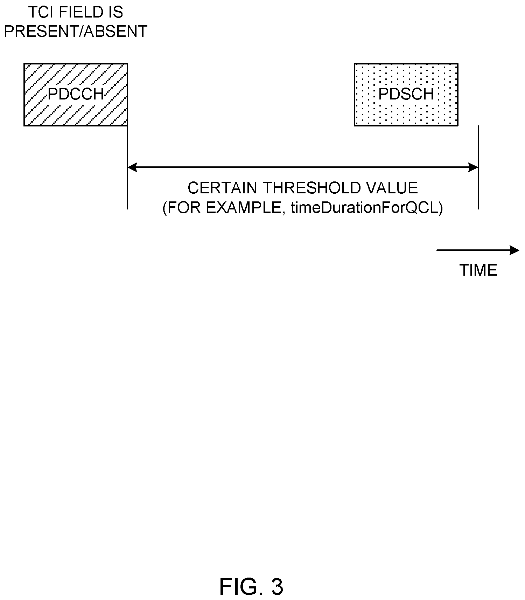

In existing systems (for example, Rel. 16), the UE may assume, for a single PDSCH in a single TRP, that when offset between DCI and the PDSCH is less than a certain threshold value (for example, timeDurationForQCL) (see FIG. 3), the PDSCH (or DMRS port for the PDSCH) is QCLed with a CORESET having the lowest CORESET ID in the latest slot in an active BWP of a serving cell. In other words, the UE may apply, to the PDSCH, a QCL (or TCI state) of the CORESET having the lowest CORESET ID in the latest slot in the active BWP of the serving cell.

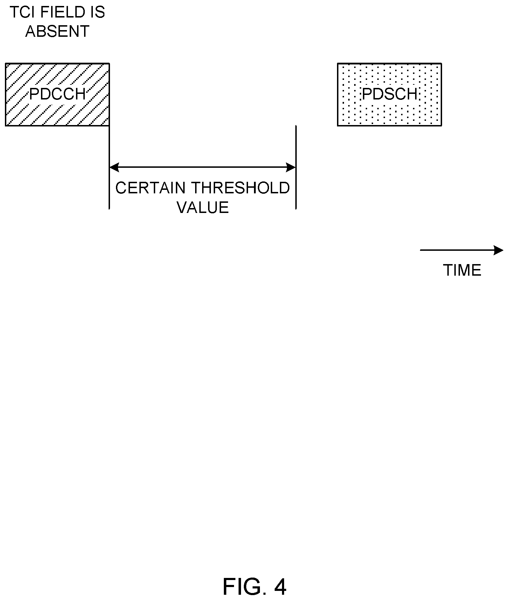

In existing systems (for example, Rel. 16), the UE may assume, for a single PDSCH in a single TRP, that when offset between DCI and the PDSCH is greater than or equal to a certain threshold value (for example, timeDurationForQCL) and a TCI field is absent in the DCI (see FIG. 4), a QCL of the PDSCH (or DMRS port for the PDSCH) is the same as a QCL of a CORESET for scheduling the PDSCH. The CORESET for scheduling the PDSCH may be interpreted as a CORESET corresponding to a PDCCH/DCI for scheduling the PDSCH.

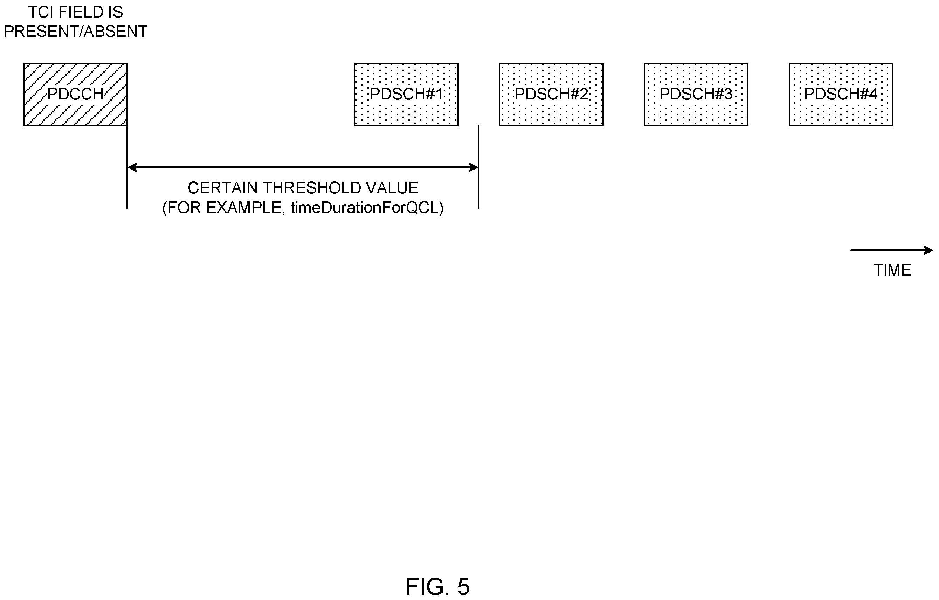

On the other hand, in multi-PDSCH supported in Rel. 17 (or later versions) (case where a plurality of PDSCHs are scheduled by one or more pieces of DCI), a case where at least one (or some PDSCHs) of the plurality of PDSCHs is less than a certain threshold value is also conceivable (see FIG. 5). In such a case, how to configure/apply/judge a QCL / TCI state of each PDSCH is an issue.

The inventors of the present invention focused on occurrence of a case where offset between at least part of multi-PDSCH scheduled by a PDCCH/DCI and the PDCCH/DCI is less than a certain threshold value, and came up with the idea of the present embodiment by studying how to configure/apply/judge a QCL / TCI state in such a case.

In Rel. 17 (or later versions), it is assumed that, in addition to a single PDCCH (without application of repetition), PDCCH repetition and a PDCCH using a single frequency network (SFN) (for example, an SFN PDCCH) are supported. Also, it is assumed that, as multi-PDSCH, multi-PDSCH in a single TRP, multi-PDSCH transmission using single DCI in multi-TRP (scheme 1 / scheme 2), a PDSCH using an SFN (SFN PDSCH), and multi-PDSCH using multi-DCI in multi-TRP (for example, M-DCI M-TRP multi-PDSCH) are supported.

In such a case, how to configure/apply/judge a QCL / TCI state of multi-PDSCH scheduled by a PDCCH (or DCI) is an issue.

The inventors of the present invention focused on a plurality of cases conceivable as the multi-PDSCH scheduled by the PDCCH, and came up with the idea of the present embodiment by studying how to perform reception control of the multi-PDSCH in each case (for example, configuration/application/judgment of a QCL / TCI state).

Embodiments according to the present disclosure will be described in detail with reference to the drawings as follows. Respective aspects (for example, respective cases) below may each be used individually, or at least two of the aspects may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, or a PUCCH resource group), a resource (for example, a reference signal resource or an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interpreted as a "spatial relation information set," "one or a plurality of pieces of spatial relation information," or the like, and vice versa. A TCI state and a TCI may be interchangeably interpreted.

In the present disclosure, contents of a plurality of PDSCHs (or DL-SCHs / CWs / TBs) / PUSCHs (or UL-SCHs) are assumed to be different, but are not limited to this.

DCI in embodiments below may be limited to a specific DCI format of DCI formats for scheduling PDSCHs (for example, DCI formats 1_0, 1_1, and 1_2), or may correspond to a plurality of DCI formats. Note that when the DCI corresponds to the plurality of DCI formats, control common to the DCI formats (same control, same processing) may be performed, or different control may be performed for each DCI format.

In the embodiments below, "a plurality of" and "two" may be interchangeably interpreted.

### (Radio Communication Method)

In the present disclosure, as a type/configuration of a PDCCH used for scheduling of multi-PDSCH (or a PDCCH for providing DCI for scheduling multi-PDSCH), at least one of a single PDCCH, PDCCH repetition, and a PDCCH using an SFN (for example, an SFN PDCCH) may be used.

The single PDCCH (for example, no repetition) may be a PDCCH to which repetition transmission is not applied, or a PDCCH with the number of repetitions being 1.

In the present disclosure, PDCCH repetition being configured/indicated may mean that two SS sets / CORESETs / PDCCH candidates are configured/indicated to be linked to each other for PDCCH repetition. A PDCCH repetition scheme in Rel. 17 may be reused.

In the present disclosure, an SFN PDCCH being configured/indicated may mean a CORESET being configured/indicated with two TCI states / QCLs (or two TCI states / QCLs being associated with a CORESET, a CORESET having two TCI states / QCLs being configured). An SFN PDCCH scheme in Rel. 17 may be reused.

In the present disclosure, as a type/configuration of multi-PDSCH, at least one of multi-PDSCH in a single TRP (for example, S-TRP multi-PDSCH), multi-PDSCH using single DCI in multi-TRP (for example, S-DCI M-TRP multi-PDSCH (scheme 1 / scheme 2)), multi-PDSCH using an SFN (for example, SFN multi-PDSCH), and multi-PDSCH using multi-DCI in multi-TRP (for example, M-DCI M-TRP multi-PDSCH) may be used.

Multi-PDSCH being configured/indicated may mean that a certain field in DCI supports scheduling of multi-PDSCH. The certain field may be a time resource allocation field (for example, a TDRA field). An index indicated by the TDRA field may be associated with a combination of certain parameters. The combination of certain parameters may be defined as a table (for example, a TDRA table).

A row of the TDRA table may indicate, based on the certain parameter, a consecutive or non-consecutive slot for a PDSCH/PUSCH. The certain parameter may be an SLIV, a mapping type, or scheduling offset corresponding to the PDSCH/PUSCH. Based on a value of the TDRA field (for example, a row index of the TDRA table) and a combination of certain parameters corresponding to the value, a PDSCH/PUSCH to be allocated to a consecutive or non-consecutive slot can be indicated.

Multi-PDSCH (or a plurality of PDSCHs) may be time multiplexed (for example, TDMed). For example, the multi-PDSCH may be scheduled in different slots. The same frequency domain resource allocation (for example, FDRA) may be applied to the time multiplexed multi-PDSCH.

Multi-PDSCH in a single TRP being configured/indicated may mean that a single TCI state / QCL is configured/indicated and the single TCI state / QCL is applied to multi-PDSCH (for example, all scheduled PDSCHs).

Multi-PDSCH (scheme 1) using single DCI in multi-TRP and being configured/indicated may mean that two TCI states / QCLs are configured/indicated to be applied to a plurality of PDSCHs. Each PDSCH may be associated with one TCI state / QCL.

Multi-PDSCH (scheme 2) using single DCI in multi-TRP and being configured/indicated may mean that two TCI states / QCLs are configured/indicated to be applied to a plurality of PDSCHs. Each PDSCH may be configured/indicated as a TDM/FDM/SDM PDSCH scheme for multi-TRP. In this case, a TDM/FDM/SDM PDSCH scheme for multi-TRP supported by Rel. 16 may be reused. For example, "each PDSCH" of the multi-PDSCH may include a plurality of PDSCHs (for example, a first PDSCH included in the multi-PDSCH includes a plurality of PDSCHs), and the plurality of PDSCHs may be transmitted by TDM/FDM/SDM (for example, repetition transmission).

M-TRP TDM PDSCH being configured/indicated may mean that, as a higher layer parameter indicating a repetition scheme (for example, repetitionScheme), a TDM scheme (for example, tdmSchemeA) is configured or a higher layer parameter indicating the number of repetitions (for example, repetitionNumber) is configured.

M-TRP FDM PDSCH being configured/indicated may mean that, as a higher layer parameter indicating a repetition scheme (for example, repetitionScheme), a first FDM scheme (for example, fdmSchemeA) or a second FDM scheme (for example, fdmSchemeB) is configured.

M-TRP SDM PDSCH being configured/indicated may mean that a DMRS port for two CDM groups is indicated.

In multi-PDSCH (scheme 2) using single DCI in multi-TRP, a different PDSCH may be associated with a different scheme (for example, S-TRP, M-TRP TDM, M-TRP FDM, or M-TRP SDM). The association may be predefined in a specification, or may be configured/indicated by higher layer signaling / MAC CE or the like.

In scheme 1 for multi-PDSCH using single DCI in multi-TRP, different PDSCHs of a plurality of PDSCHs scheduled by the single DCI may be transmitted with different beams (or TCI states / QCLs), and each PDSCH may be transmitted with only one beam. In other words, each PDSCH may be S-TRP PDSCH transmission. In scheme 2 for multi-PDSCH using single DCI in multi-TRP, each one PDSCH may be transmitted with two beams. In other words, each PDSCH may correspond to M-TRP PDSCH repetition.

Multi-PDSCH using multi-DCI in multi-TRP and being configured/indicated may mean that a CORESET pool index (for example, 0 or 1) is configured for a CORESET for scheduling a PDSCH. When a CORESET pool index ID is configured for any CORESET (or at least one CORESET), for another CORESET without a configured CORESET pool index ID, it may be assumed that CORESET pool index = 0 (or may be assumed that a CORESET pool ID is configured).

Multi-PDSCH using an SFN and being configured/indicated may mean that two TCI states / QCLs are configured/indicated and the two TCI states / QCLs are applied to multi-PDSCH. Each PDSCH may be associated with two TCI states / QCLs, and may be configured/indicated as an SFN PDSCH scheme. An SFN PDSCH scheme in Rel. 17 may be reused.

### <First Embodiment>

A first embodiment describes a QCL / TCI state (for example, a default QCL / TCI state) to be applied to each PDSCH in a case where multi-PDSCH from a single TRP (for example, S-TRP multi-PDSCH) is scheduled by single DCI. In the multi-PDSCH, one QCL / TCI state may be determined for each PDSCH.

A QCL / TCI state for the multi-PDSCH may be determined based on at least one of case 1A, case 1B, and case 1C below.

Note that application of the present embodiment to a default QCL for single TRP (for example, Default QCL for S-TRP) may be applied when a certain condition is satisfied. The certain condition may be a case where a certain higher layer parameter (for example, enableDefaultTCI-StatePerCoresetPoolIndex / enableTwoDefaultTCIStates) is not configured.

### {Case 1A}

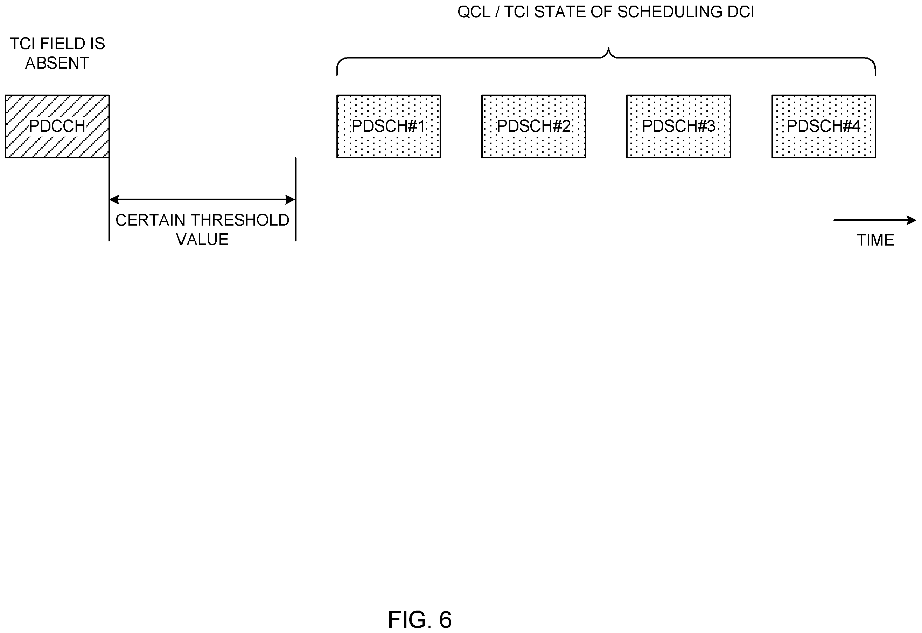

Assume a case where offset between a PDCCH/DCI for scheduling the multi-PDSCH and all PDSCHs (for example, scheduling offset) is greater than or equal to a certain threshold value and where the DCI does not include a TCI field (see FIG. 6). FIG. 6 shows a case where PDSCHs #1 to #4 are scheduled by one PDCCH/DCI, scheduling offset between the PDCCH/DCI and PDSCHs #1 to #4 is greater than or equal to a certain threshold value (for example, timeDurationForQCL), and a TCI field is absent in the DCI.

In such a case, a QCL / TCI state of scheduling DCI may be applied to all PDSCHs #1 to #4. In the present disclosure, the QCL / TCI state of the scheduling DCI may be interpreted as a QCL / TCI state of a PDCCH corresponding to the scheduling DCI, or a QCL / TCI state of a CORESET corresponding to the scheduling DCI.

### {Case 1B}

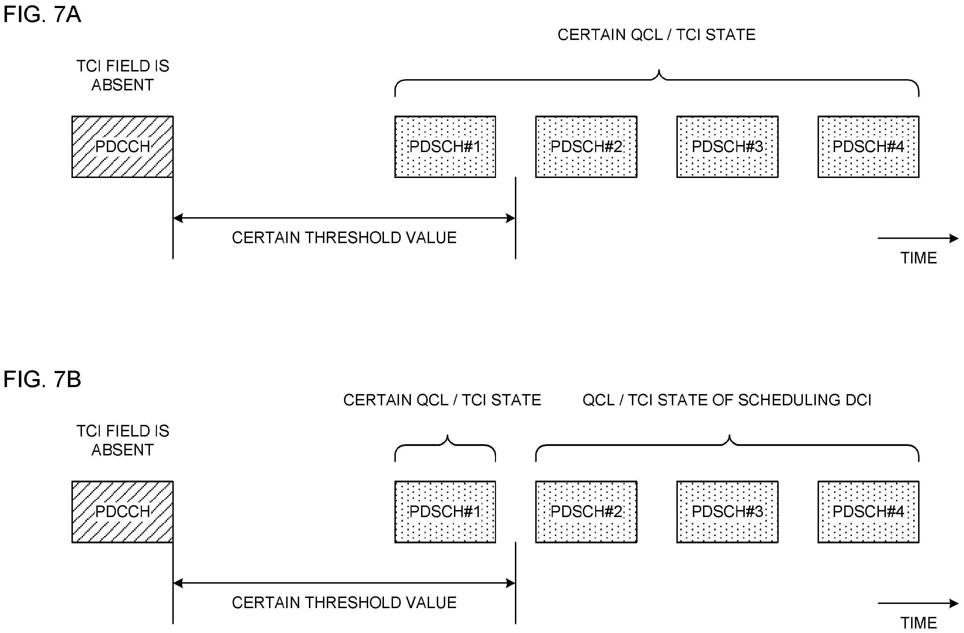

Assume a case where scheduling offset between a PDCCH/DCI for scheduling the multi-PDSCH and some PDSCHs (or at least one PDSCH) is less than a certain threshold value and where the DCI does not include a TCI field (see FIGS. 7A and 7B). FIGS. 7A and 7B each shows a case where PDSCHs #1 to #4 are scheduled by one PDCCH/DCI, scheduling offset between the PDCCH/DCI and PDSCH #1 is less than a certain threshold value, and a TCI field is absent in the DCI. Note that FIGS. 7A and 7B each shows a case where scheduling offset between the PDCCH/DCI and PDSCHs #2 to #4 is greater than or equal to the certain threshold value.

In such a case, a QCL / TCI state of each PDSCH may be determined based on at least one of Alt. 1B-1 to Alt. 1B-2 below.

### <<Alt. 1B-1>>

A certain QCL / TCI state may be applied to all scheduled PDSCHs #1 to #4 (see FIG. 7A). In other words, the same QCL / TCI state may be applied to all PDSCHs #1 to #4. The certain QCL / TCI state may be a QCL / TCI state of a CORESET having the lowest CORESET ID in the latest slot in which one or more CORESETs in an active BWP of a serving cell are monitored by the UE (CORESET with the lowest CORESETID in the latest slot in which one or more CORESETs within the active BWP of the serving cell are monitored by the UE).

The UE may apply, to plurality of PDSCHs #1 to #4, a QCL / TCI state of a CORESET having the lowest CORESET ID in the latest slot in the active BWP of the serving cell.

The same QCL / TCI state is applied to all PDSCHs #1 to #4, thereby eliminating the need for the UE to change a beam over the plurality of PDSCHs, and thus UE operation can be simplified.

### <<Alt. 1B-2>>

A first QCL / TCI state may be applied to a first PDSCH, and a second QCL / TCI state may be applied to a second PDSCH (see FIG. 7B).

For example, a certain QCL / TCI state (first QCL / TCI) may be applied to a first PDSCH (here, PDSCH #1) with scheduling offset less than a certain threshold value. The certain QCL / TCI state may be a QCL / TCI state of a CORESET having the lowest CORESET ID in the latest slot in which one or more CORESETs in an active BWP of a serving cell are monitored by the UE.

On the other hand, a QCL / TCI state (second QCL / TCI state) of scheduling DCI may be applied to a second PDSCH (here, PDSCHs #2 to #4) with scheduling offset greater than or equal to the certain threshold value. The second QCL / TCI state may be a QCL / TCI state of a PDCCH/CORESET corresponding to the scheduling DCI.

As described above, a plurality of (for example, two) QCLs may be prepared for plurality of PDSCHs #1 to #4, and one QCL may be applied for each part of the PDSCHs.

Application of different QCLs / TCI states to PDSCHs #1 to #4 is allowed, thereby enabling a QCL / TCI state applied to PDSCH reception to be controlled flexibly.

### {Case 1C}

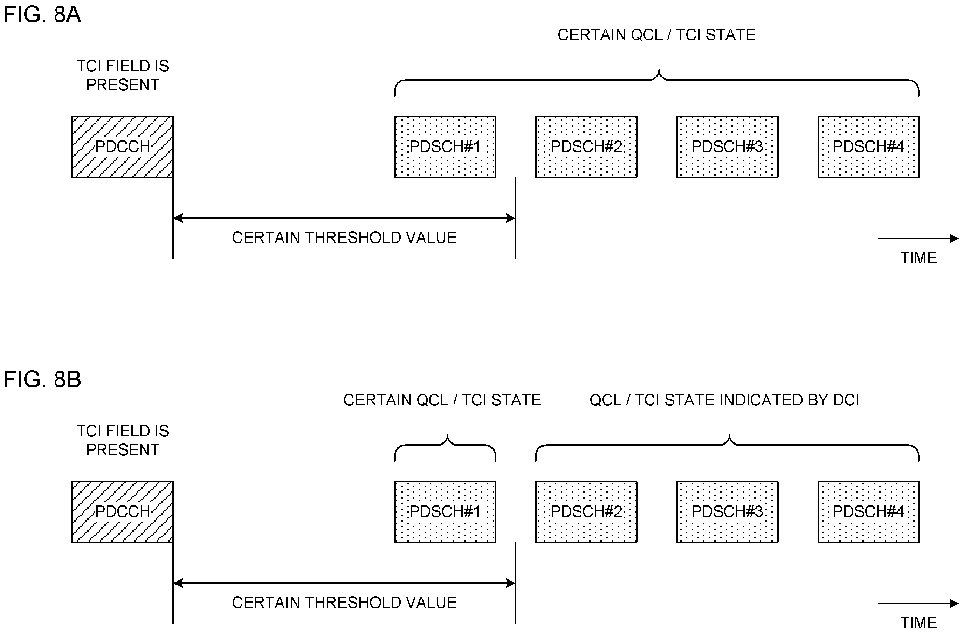

Assume a case where scheduling offset between a PDCCH/DCI for scheduling the multi-PDSCH and some PDSCHs (or at least one PDSCH) is less than a certain threshold value and where the DCI includes a TCI field (see FIGS. 8A and 8B). FIGS. 8A and 8B each shows a case where PDSCHs #1 to #4 are scheduled by one PDCCH/DCI, scheduling offset between the PDCCH/DCI and PDSCH #1 is less than a certain threshold value, and a TCI field is present in the DCI. Note that FIGS. 8A and 8B each shows a case where scheduling offset between the PDCCH/DCI and PDSCHs #2 to #4 is greater than or equal to the certain threshold value.

In such a case, a QCL / TCI state of each PDSCH may be determined based on at least one of Alt. 1C-1 to Alt. 1C-2 below.

### <<Alt. 1C-1>>

A certain QCL / TCI state may be applied to all scheduled PDSCHs #1 to #4 (see FIG. 8A). In other words, the same QCL / TCI state may be applied to all PDSCHs #1 to #4. The certain QCL / TCI state may be a QCL / TCI state of a CORESET having the lowest CORESET ID in the latest slot in which one or more CORESETs in an active BWP of a serving cell are monitored by the UE.

The UE may apply, to plurality of PDSCHs #1 to #4, a QCL / TCI state of a CORESET having the lowest CORESET ID in the latest slot in the active BWP of the serving cell.

The same QCL / TCI state is applied to all PDSCHs #1 to #4, thereby eliminating the need for the UE to change a beam over the plurality of PDSCHs, and thus UE operation can be simplified.

### <<Alt. 1C-2>>

A first QCL / TCI state may be applied to a first PDSCH, and a second QCL / TCI state may be applied to a second PDSCH (see FIG. 8B).

For example, a certain QCL / TCI state (first QCL / TCI) may be applied to a first PDSCH (here, PDSCH #1) with scheduling offset less than a certain threshold value. The certain QCL / TCI state may be a QCL / TCI state of a CORESET having the lowest CORESET ID in the latest slot in which one or more CORESETs in an active BWP of a serving cell are monitored by the UE.

On the other hand, a QCL / TCI state (second QCL / TCI state) indicated by DCI (for example, a TCI field) may be applied to a second PDSCH (here, PDSCHs #2 to #4) with scheduling offset greater than or equal to the certain threshold value.

As described above, a plurality of (for example, two) QCLs may be prepared for plurality of PDSCHs #1 to #4, and one QCL may be applied for each part of the PDSCHs.

Application of different QCLs / TCI states to PDSCHs #1 to #4 is allowed, thereby enabling a QCL / TCI state applied to PDSCH reception to be controlled flexibly.

### <Second Embodiment>

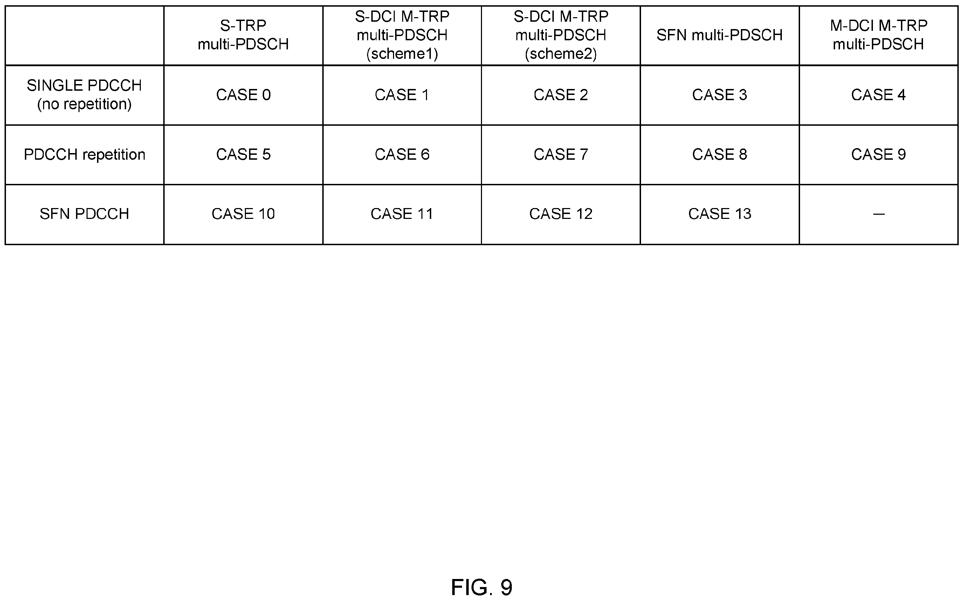

A second embodiment describes QCLs / TCI states in respective cases of combinations of types/configurations of a PDCCH used for scheduling of multi-PDSCH and types/configurations of multi-PDSCH. Description below describes case 0 to case 13 (see FIG. 9) by using examples, but the cases of the combinations are not limited to this.

A case where multi-PDSCH using single DCI in multi-TRP (or multi-PDSCH from multi-TRP using single DCI) is configured/supported may be a case where at least one of configuration of a certain higher layer parameter, indication, by at least one TCI codepoint, of two TCI states, and indication, by DCI, of a plurality of PDSCH time domain allocations is performed.

A case where multi-PDSCH using multi-DCI in multi-TRP (or multi-PDSCH from multi-TRP using multi-DCI) is configured/supported may be a case where at least one of configuration of a certain higher layer parameter, configuration of two different values as CORESET pool index values, and indication, by DCI, of a plurality of PDSCH time domain allocations is performed.

### ((Case 0))

The QCL / TCI state described in the first embodiment may be applied to multi-PDSCH using a single PDCCH in a single TRP. A UE may judge, by using at least one method described in the first embodiment, a QCL / TCI state of the multi-PDSCH transmitted from the single TRP by using the single PDCCH.

### ((Case 1 / Case 2 / Case 3))

Assume a case (case 1 / case 2) where multi-PDSCH using single DCI in multi-TRP is scheduled by using a single PDCCH or a case (case 3) where multi-PDSCH using an SFN is scheduled by using a single PDCCH. In this case, one or two QCLs / TCI states may be determined, and the QCL(s) / TCI state(s) may be applied to a plurality of PDSCHs.

Case 1 corresponds to single PDCCH + multi-PDSCH using single DCI (scheme 1) in multi-TRP (for example, single PDCCH + S-DCI M-TRP multi PDSCH (scheme 1)).

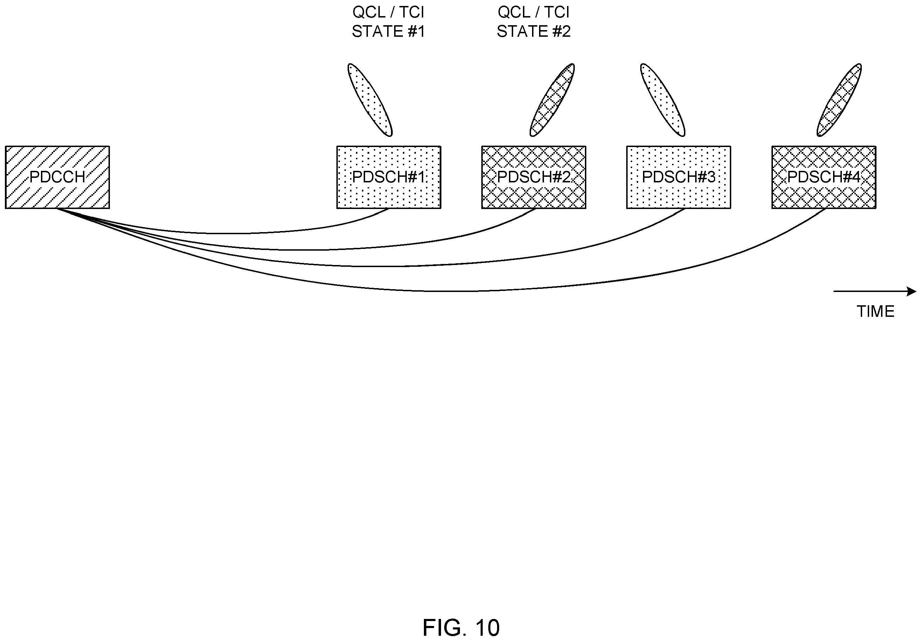

FIG. 10 shows an example of case 1. FIG. 10 shows a case where the same/one PDCCH (or DCI) schedules plurality of PDSCHs #1 to #4. Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

Case 2 corresponds to single PDCCH + multi-PDSCH using single DCI (scheme 2) in multi-TRP (for example, single PDCCH + S-DCI M-TRP multi PDSCH (scheme 2)).

Case 3 corresponds to a single PDCCH and multi-PDSCH using an SFN (for example, single PDCCH + SFN multi-PDSCH).

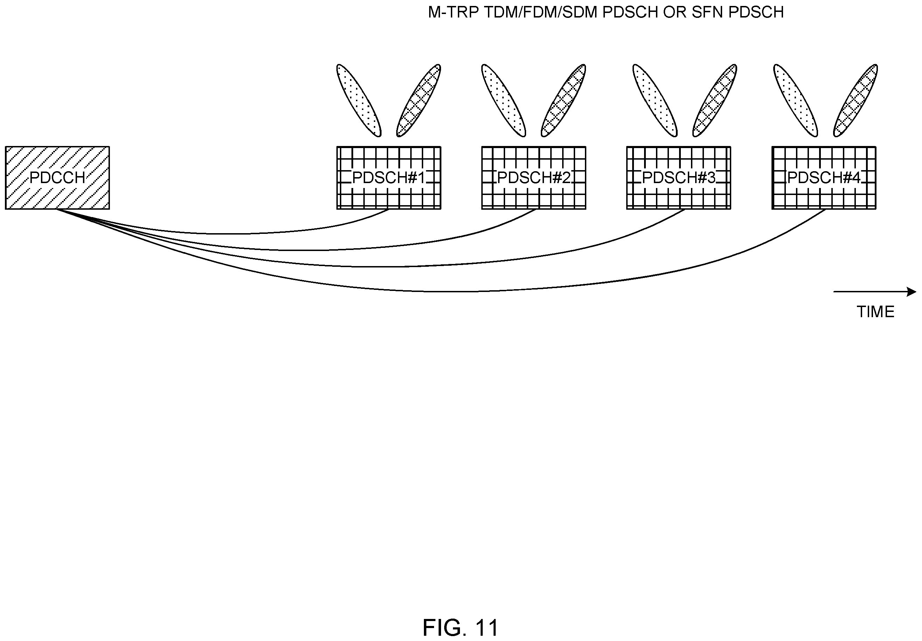

FIG. 11 shows an example of case 2 / case 3. FIG. 11 shows a case where the same/one PDCCH (or DCI) schedules plurality of PDSCHs #1 to #4. Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

In case 2, reception from multi-TRP (M-TRP repetition) may be performed. In this case, PDSCHs in a certain slot (for example, PDSCHs corresponding to the same TB) may be transmitted from a plurality of TRPs. Different TCI states / QCLs may be applied to the PDSCHs transmitted from the respective TRPs. For example, two QCLs / TCI states may be determined, and may be applied to the plurality of PDSCHs. Each PDSCH may be associated with two QCLs / TCI states, and a multi-TRP scheme (for example, M-TRP TDM/FDM/SDM) may be applied to each PDSCH. The UE may control so as to perform, for one or more PDSCHs transmitted in a certain slot, reception by using one or more TCI states (for example, a first TCI state and a second TCI state).

In case 3, PDSCHs #1 to #4 may each be associated with two TCI states / QCLs, and may be configured/indicated as an SFN PDSCH scheme. For example, two QCLs / TCI states may be determined, and may be applied to the plurality of PDSCHs. Each PDSCH may be associated with two QCLs / TCI states, and an SFN PDSCH scheme may be applied to each PDSCH. The UE may control so as to perform, for one or more PDSCHs transmitted in a certain slot, reception by using one or more TCI states (for example, a first TCI state and a second TCI state).

A QCL / TCI state for the multi-PDSCH in case 1 / case 2 / case 3 may be determined based on at least one of case 2A, case 2B, and case 2C below.

Note that application of the present embodiment to a default QCL for multi-TRP using single DCI (for example, Default QCL for sDCI M-TRP) may be applied when a certain condition is satisfied. The certain condition may be a case where a certain higher layer parameter (for example, enableTwoDefaultTCIStates / new RRC parameter) is configured.

### {Case 2A}

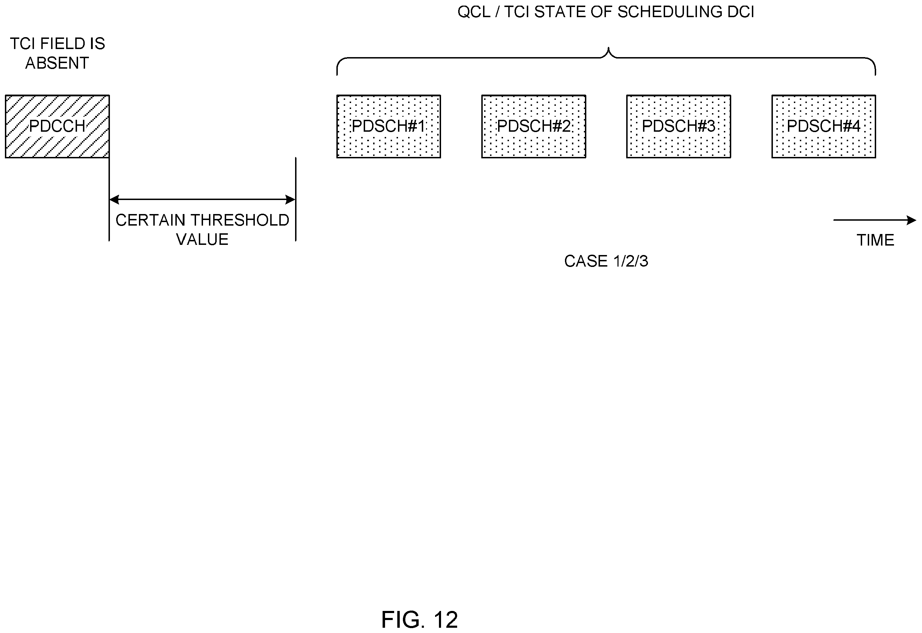

Assume a case where scheduling offset between a PDCCH/DCI for scheduling the multi-PDSCH and all PDSCHs is greater than or equal to a certain threshold value and where the DCI does not include a TCI field (see FIG. 12). FIG. 12 shows a case where PDSCHs #1 to #4 are scheduled by one PDCCH/DCI, scheduling offset between the PDCCH/DCI and PDSCHs #1 to #4 is greater than or equal to a certain threshold value (for example, timeDurationForQCL), and a TCI field is absent in the DCI.

In this case, a QCL / TCI state of scheduling DCI may be applied to all PDSCHs #1 to #4.

In this case, only one default QCL / TCI state may be determined. In other words, case 2-A may correspond to a single-TRP PDSCH (S-TRP PDSCH), and a multi-TRP PDSCH having a default QCL (M-TRP PDSCH with default QCL) may not be applied/supported.

### {Case 2B}

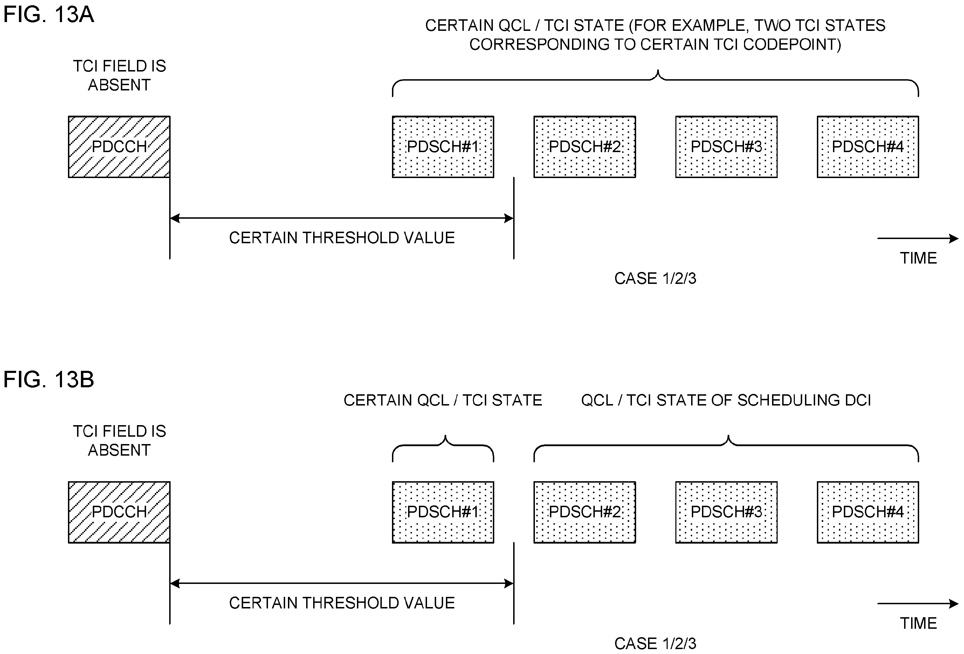

Assume a case where scheduling offset between a PDCCH/DCI for scheduling the multi-PDSCH and some PDSCHs (or at least one PDSCH) is less than a certain threshold value and where the DCI does not include a TCI field (see FIGS. 13A and 13B). FIGS. 13A and 13B each shows a case where PDSCHs #1 to #4 are scheduled by one PDCCH/DCI, scheduling offset between the PDCCH/DCI and PDSCH #1 is less than a certain threshold value, and a TCI field is absent in the DCI. Note that FIGS. 13A and 13B each shows a case where scheduling offset between the PDCCH/DCI and PDSCHs #2 to #4 is greater than or equal to the certain threshold value.

In such a case, a QCL / TCI state of each PDSCH may be determined based on at least one of Alt. 2B-1 to Alt. 2B-2 below.

### <<Alt. 2B-1>>

A certain QCL / TCI state may be applied to all scheduled PDSCHs #1 to #4 (see FIG. 13A). In other words, the same QCL / TCI state may be applied to all PDSCHs #1 to #4. The certain QCL / TCI state may be two TCI states corresponding to a certain (for example, the lowest) TCI codepoint of TCI codepoints each including two different TCI states. Note that the present disclosure describes a case where two TCI states corresponding to a TCI codepoint with the lowest index is selected, but is not limited to this. Two TCI states may be selected based on another condition (for example, two TCI states corresponding to a TCI codepoint with the highest index).

The TCI codepoint corresponds to a value (or index / bit value) indicated by a TCI field included in DCI. TCI states to which respective codepoints of the TCI field corresponds (for example, the number of TCI states / TCI state indices) may be preconfigured by RRC / MAC CE.

In codepoints of the TCI field of the DCI, the UE may control so as to apply, to all PDSCHs #1 to #4, two TCI states corresponding to a codepoint with the lowest value/index, among codepoints each corresponding to two different TCI states.

### <<Alt. 2B-2>>

A first QCL / TCI state may be applied to a first PDSCH, and a second QCL / TCI state may be applied to a second PDSCH (see FIG. 13B).

For example, a certain QCL / TCI state (first QCL / TCI) may be applied to a first PDSCH (here, PDSCH #1) with scheduling offset less than a certain threshold value. The certain QCL / TCI state may be two TCI states corresponding to the lowest TCI codepoint of TCI codepoints each including two different TCI states.

On the other hand, a QCL / TCI state (second QCL / TCI state) of scheduling DCI may be applied to a second PDSCH (here, PDSCHs #2 to #4) with scheduling offset greater than or equal to the certain threshold value. The second QCL / TCI state may be a QCL / TCI state of a PDCCH/CORESET corresponding to the scheduling DCI.

### {Case 2C}

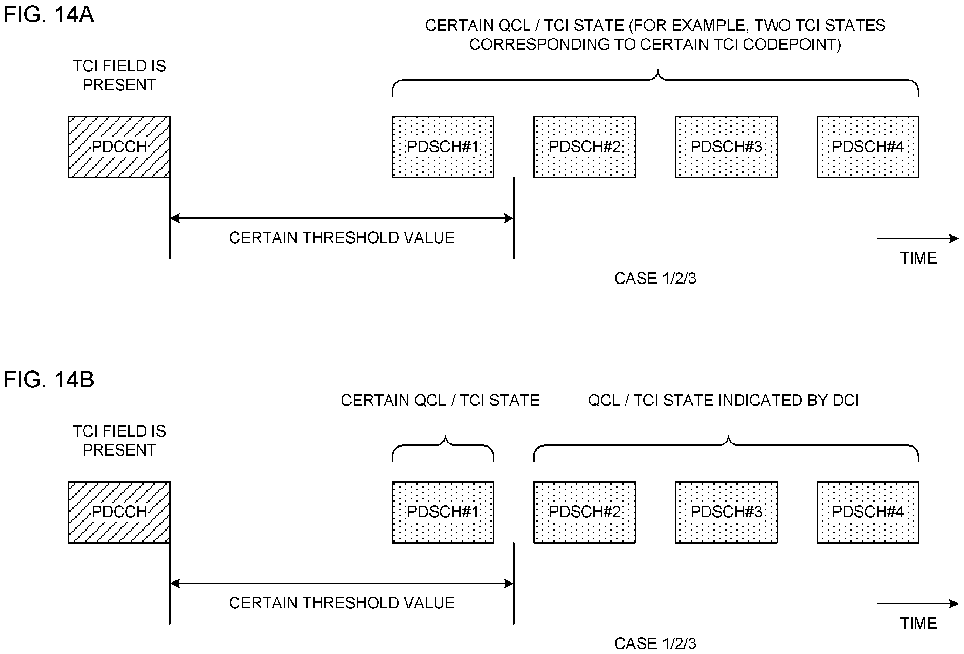

Assume a case where scheduling offset between a PDCCH/DCI for scheduling the multi-PDSCH and some PDSCHs (or at least one PDSCH) is less than a certain threshold value and where the DCI includes a TCI field (see FIGS. 14A and 14B). FIGS. 14A and 14B each shows a case where PDSCHs #1 to #4 are scheduled by one PDCCH/DCI, scheduling offset between the PDCCH/DCI and PDSCH #1 is less than a certain threshold value, and a TCI field is present in the DCI. Note that FIGS. 14A and 14B each shows a case where scheduling offset between the PDCCH/DCI and PDSCHs #2 to #4 is greater than or equal to the certain threshold value.

In such a case, a QCL / TCI state of each PDSCH may be determined based on at least one of Alt. 2C-1 to Alt. 2C-2 below.

### <<Alt. 2C-1>>

A certain QCL / TCI state may be applied to all scheduled PDSCHs #1 to #4 (see FIG. 14A). In other words, the same QCL / TCI state may be applied to all PDSCHs #1 to #4. The certain QCL / TCI state may be two TCI states corresponding to a certain (for example, the lowest) TCI codepoint of TCI codepoints each including two different TCI states. Note that the present disclosure describes a case where two TCI states corresponding to a TCI codepoint with the lowest index is selected, but is not limited to this. Two TCI states may be selected based on another condition (for example, two TCI states corresponding to a TCI codepoint with the highest index).

In codepoints of the TCI field of the DCI, the UE may control so as to apply, to all PDSCHs #1 to #4, two TCI states corresponding to a codepoint with the lowest value/index, among codepoints each corresponding to two different TCI states.

For example, in case 1, two different TCI states may be applied to different PDSCHs (or PDSCHs in different slots). In case 2 / case 3, two different TCI states may be applied to each PDSCH.

### <<Alt. 2C-2>>

A first QCL / TCI state may be applied to a first PDSCH, and a second QCL / TCI state may be applied to a second PDSCH (see FIG. 14B).

For example, a certain QCL / TCI state (first QCL / TCI) may be applied to a first PDSCH (here, PDSCH #1) with scheduling offset less than a certain threshold value. The certain QCL / TCI state may be two TCI states corresponding to the lowest TCI codepoint of TCI codepoints each including two different TCI states.

On the other hand, one or more QCLs / TCI states (second QCL / TCI state) indicated by DCI (for example, a TCI field) may be applied to a second PDSCH (here, PDSCHs #2 to #4) with scheduling offset greater than or equal to the certain threshold value. Two TCI states may be indicated by the TCI field of the DCI.

Note that, as described in case 2B / case 2C, when two QCLs / TCI states are determined, and the two QCLs / TCI states are applied to a plurality of PDSCHs, mapping between a QCL / TCI state and multi-PDSCH may be controlled based on a certain rule. The operation described in case 2B / case 2C may be applied/enabled when at least one of a case where a certain higher layer parameter (for example, enableTwoDefaultTCI-States) is configured and a case where at least one TCI codepoint indicating two TCI states is present is satisfied.

For example, in case 1, assume a case where two different TCI states are applied to different PDSCHs #1 to #4 (or PDSCHs in different slots). In this case, a first TCI state may be applied to PDSCHs #1 and #3 with odd-numbered indices, and a second TCI state may be applied to PDSCHs #2 and #4 with even-numbered indices (for example, a cyclic mapping pattern). Alternatively, a first TCI state may be applied to PDSCHs #1 and #2 with X (for example, X = 2) consecutive indices, and a second TCI state may be applied to PDSCHs #3 and #4 (for example, a sequential mapping pattern).

In case 2 / case 3, assume a case where two different TCI states are applied to different PDSCHs #1 to #4 (or PDSCHs in different slots). In this case, in case 2, each PDSCH may be associated with two QCLs / TCI states, and a PDSCH scheme for M-TRP TDM/FDM/SDM may be applied to each PDSCH. Alternatively, in case 3, each PDSCH may be associated with two QCLs / TCI states, and an SFN PDSCH scheme may be applied to each PDSCH.

### ((Case 4))

Assume a case (case 4) where multi-PDSCH using multi-DCI in multi-TRP is scheduled by using a single PDCCH. In this case, one QCL may be determined for each PDSCH, depending on a CORESET pool index.

Case 4 corresponds to single PDCCH + multi-PDSCH using multi-DCI in multi-TRP (for example, single PDCCH + M-DCI M-TRP multi PDSCH).

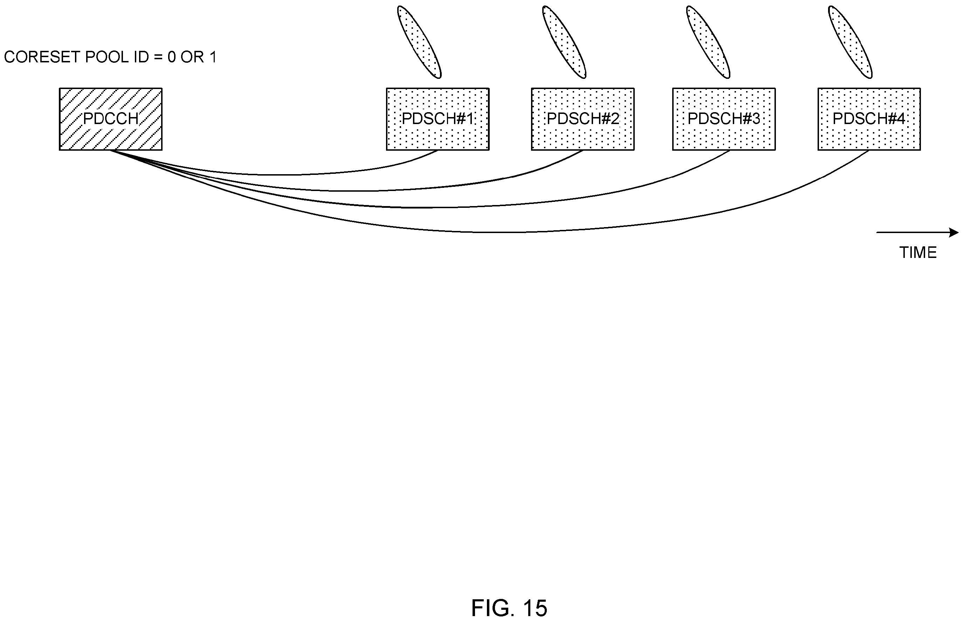

FIG. 15 shows an example of case 4. FIG. 15 shows a case where the same/one PDCCH (or DCI) schedules plurality of PDSCHs #1 to #4. For one PDCCH (or CORESET corresponding to the PDCCH), a certain CORESET pool index (for example, CORESET pool ID = 0 or 1) may be configured.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

The QCL / TCI state determination method (for example, case 1A / case 1B / case 1C) described in the first embodiment may be used for a QCL / TCI state for the multi-PDSCH in case 4.

Case 1B / case 1C may, when being applied to case 4, be applied by interpreting the certain QCL / TCI state as the QCL / TCI state. For example, the certain QCL / TCI state may be a QCL / TCI state of a CORESET having the lowest CORESET ID, among CORESETs having a CORESET pool index with the same value as that of a PDCCH for scheduling a PDSCH, in the latest slot in which one or more CORESETs associated with the CORESET pool index with the same value as that of the PDCCH for scheduling a PDSCH in an active BWP of a serving cell are monitored by the UE (CORESET with the lowest CORESETID among the CORESETs with same value of CORESETPoolIndex as the PDCCH scheduling the PDSCH in the latest slot in which one or more CORESETs associated with the same value of CORESETPoolIndex as the PDCCH scheduling that PDSCH within the active BWP of the serving cell are monitored by the UE).

In other words, in case 4, case 1B / case 1C may be applied by interpreting, as the QCL / TCI state, the certain QCL / TCI state in case 1B (for example, Alt. 1B-1 / Alt. 1B-2) / case 1C (for example, Alt. 1C-1 / Alt. 1C-2), in consideration of a CORESET pool index corresponding to a PDCCH for scheduling a PDSCH.

In case 4, the QCL / TCI state determination method (for example, case 1A / case 1B / case 1C) described in the first embodiment may be applied/enabled when a certain higher layer parameter (for example, enableDefaultTCI-StatePerCoresetPoolIndex) is configured.

### ((Case 5))

Assume a case (case 5) where multi-PDSCH in a single TRP is scheduled by using PDCCH repetition. In this case, one QCL may be determined for each PDSCH.

Case 5 corresponds to multi-PDSCH using PDCCH repetition in a single TRP (for example, PDCCH repetition + S-TRP multi PDSCH).

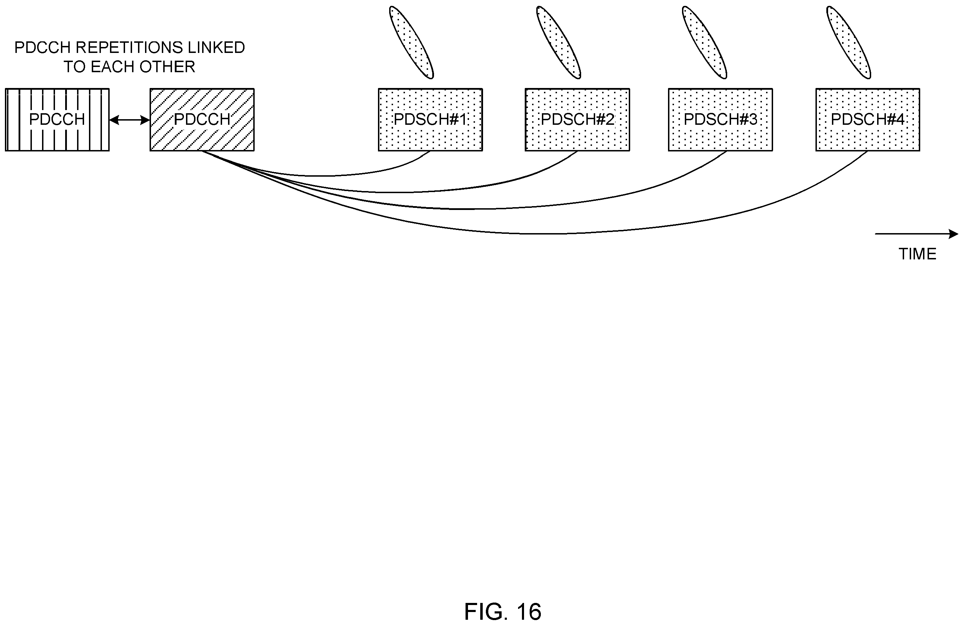

FIG. 16 shows an example of case 5. FIG. 16 shows a case where PDCCH repetition (for example, a plurality of PDCCHs (or DCI)) schedules plurality of PDSCHs #1 to #4. Search space sets / CORESETs / PDCCH candidates corresponding to the plurality of respective PDCCHs may be linked to / associated with each other.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

The QCL / TCI state determination method (for example, case 1A / case 1B / case 1C) described in the first embodiment may be used for a QCL / TCI state for the multi-PDSCH in case 5.

Case 1A / case 1B (for example, Alt. 1B-2) may, when being applied to case 5, be applied by interpreting, as the QCL / TCI state, the QCL / TCI state applied to the PDSCH with the scheduling offset greater than or equal to the certain threshold value. For example, the QCL / TCI state applied to the PDSCH with the scheduling offset greater than or equal to the certain threshold value may be a QCL / TCI state corresponding to a CORESET with a smaller index, among two CORESETs linked to each other with scheduling DCI.

In other words, in case 5, case 1A / case 1B may be applied by interpreting, as the QCL / TCI state, the QCL / TCI state in case 1A / case 1B (for example, Alt. 1B-2), in consideration of indices of CORESETs each corresponding to PDCCH repetition (or DCI) for scheduling a PDSCH.

Note that case 5 shows a case where a QCL / TCI state corresponding to a CORESET with a smaller index, among CORESETs each corresponding to the PDCCH repetition (or DCI), is applied, but is not limited to this.

For example, a QCL / TCI state corresponding to a CORESET with a larger index, among CORESETs linked to each other and each corresponding to PDCCH repetition (or DCI), may be selected. Alternatively, a QCL / TCI state corresponding to a CORESET having a lower (or higher) CORESET pool index, among the two CORESETs linked to each other, may be selected. Alternatively, a QCL / TCI state corresponding to a CORESET associated with a search space set / PDCCH candidate having a lower (or higher) index, among search space sets / PDCCH candidates linked to each other and each corresponding to PDCCH repetition (or DCI), may be selected. Alternatively, a QCL / TCI state corresponding to a CORESET associated with a PDCCH candidate to be started earlier / started later / ended earlier / ended later, among PDCCH candidates linked to each other and each corresponding to PDCCH repetition (or DCI), may be selected.

In case 5, the QCL / TCI state determination method (for example, case 1A / case 1B / case 1C) described in the first embodiment may be applied when scheduling DCI is provided by PDCCH repetition.

Scheduling offset between PDCCH repetition (or DCI) and multi-PDSCH may be determined by using, as a reference, specific PDCCH repetition (or PDCCH candidate associated with the PDCCH repetition). For example, when a plurality of (for example, two) PDCCH candidates linked to each other and corresponding to the PDCCH repetition are present, the UE may judge the scheduling offset, based on a PDCCH candidate to be ended later. Note that the specific PDCCH candidate is not limited to the PDCCH candidate to be ended later, and may be a PDCCH candidate to be ended earlier.

### ((Case 6 / Case 7 / Case 8))

Assume a case (case 6 / case 7) where multi-PDSCH using single DCI in multi-TRP is scheduled by using PDCCH repetition or a case (case 8) where multi-PDSCH using an SFN is scheduled by using PDCCH repetition. In this case, two QCLs / TCI states may be determined, and the two QCLs / TCI states may be applied to a plurality of PDSCHs.

Case 6 corresponds to PDCCH repetition + multi-PDSCH using single DCI (scheme 1) in multi-TRP (for example, PDCCH repetition + S-DCI M-TRP multi PDSCH (scheme 1)).

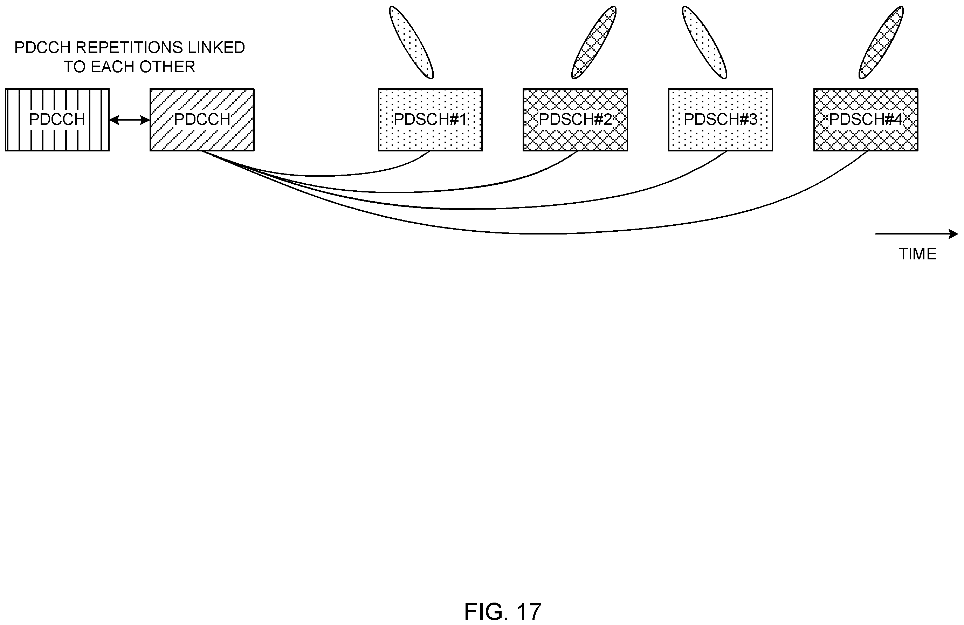

FIG. 17 shows an example of case 6. FIG. 17 shows a case where PDCCH repetition (for example, a plurality of PDCCHs (or DCI)) schedules plurality of PDSCHs #1 to #4. Search space sets / CORESETs / PDCCH candidates corresponding to the plurality of respective PDCCHs may be linked to / associated with each other.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

Case 7 corresponds to PDCCH repetition + multi-PDSCH using single DCI (scheme 2) in multi-TRP (for example, PDCCH repetition + S-DCI M-TRP multi PDSCH (scheme 2)).

Case 8 corresponds to PDCCH repetition and multi-PDSCH using an SFN (for example, PDCCH repetition + SFN multi-PDSCH).

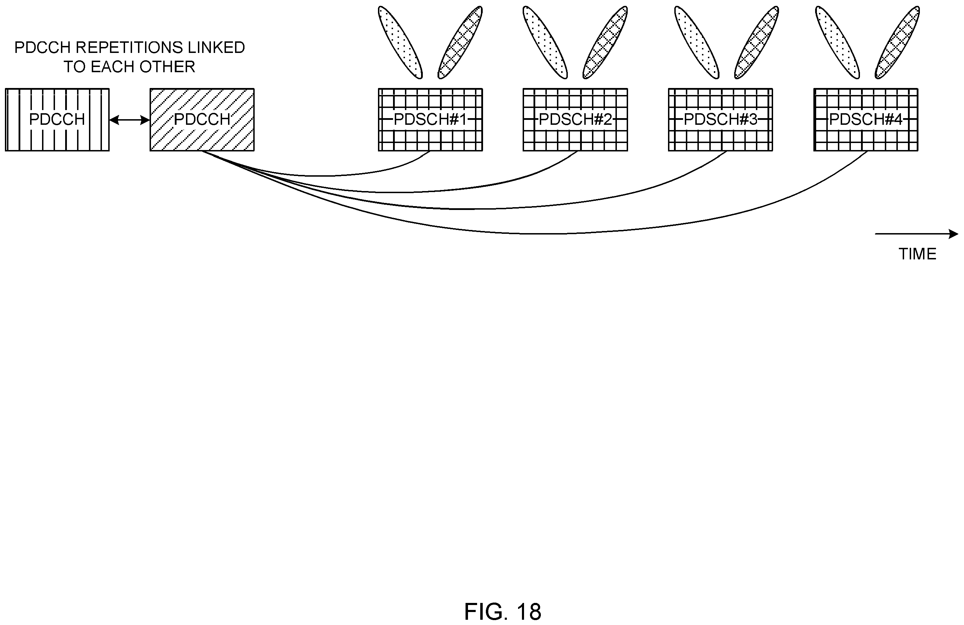

FIG. 18 shows an example of case 7 / case 8. FIG. 18 shows a case where PDCCH repetition (for example, a plurality of PDCCHs (or DCI)) schedules plurality of PDSCHs #1 to #4. Search space sets / CORESETs / PDCCH candidates corresponding to the plurality of respective PDCCHs may be linked to / associated with each other.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

In case 7, reception from multi-TRP (M-TRP repetition) may be performed. In this case, PDSCHs in a certain slot (for example, PDSCHs corresponding to the same TB) may be transmitted from a plurality of TRPs. Different TCI states / QCLs may be applied to the PDSCHs transmitted from the respective TRPs. For example, two QCLs / TCI states may be determined, and may be applied to the plurality of PDSCHs. Each PDSCH may be associated with two QCLs / TCI states, and a multi-TRP scheme (for example, M-TRP TDM/FDM/SDM) may be applied to each PDSCH. The UE may control so as to perform, for one or more PDSCHs transmitted in a certain slot, reception by using one or more TCI states (for example, a first TCI state and a second TCI state).

In case 8, PDSCHs #1 to #4 may each be associated with two TCI states / QCLs, and may be configured/indicated as an SFN PDSCH scheme. For example, two QCLs / TCI states may be determined, and may be applied to the plurality of PDSCHs. Each PDSCH may be associated with two QCLs / TCI states, and an SFN PDSCH scheme may be applied to each PDSCH. The UE may control so as to perform, for one or more PDSCHs transmitted in a certain slot, reception by using one or more TCI states (for example, a first TCI state and a second TCI state).

The QCL / TCI state determination method (for example, case 2A / case 2B / case 2C) described in case 1 / case 2 / case 3 may be used for a QCL / TCI state for the multi-PDSCH in case 6 / case 7 / case 8.

For example, case 2A / case 2B (for example, Alt. 2B-2) may, when being applied to case 6 / case 7 / case 8, be applied by interpreting, as the QCL / TCI state, the QCL / TCI state applied to the PDSCH with the scheduling offset greater than or equal to the certain threshold value. For example, the QCL / TCI state applied to the PDSCH with the scheduling offset greater than or equal to the certain threshold value may be two QCLs / TCI states of two CORESETs linked to each other with scheduling DCI.

In other words, in case 6 / case 7 / case 8, case 2A / case 2B may be applied by interpreting, as the QCL / TCI state, the QCL / TCI state in case 2A / case 2B (for example, Alt. 2B-2), in consideration of QCLs / TCI states of respective CORESETs linked to each other and each corresponding to PDCCH repetition (or DCI) for scheduling a PDSCH.

For example, a QCL / TCI state for the multi-PDSCH in case 6 / case 7 / case 8 may be determined based on at least one of case 3A, case 3B, and case 3C below.

### {Case 3A}

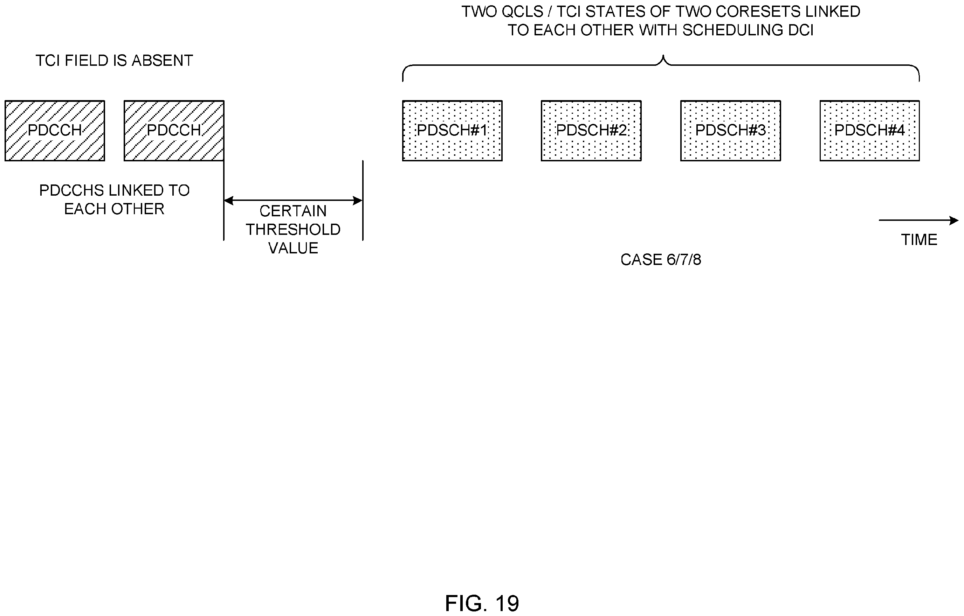

Assume a case where scheduling offset between PDCCH repetition / DCI for scheduling the multi-PDSCH and all PDSCHs is greater than or equal to a certain threshold value and where the DCI does not include a TCI field (see FIG. 19). FIG. 19 shows a case where PDSCHs #1 to #4 are scheduled by the PDCCH repetition (here, two PDCCHs linked to each other), scheduling offset between a specific PDCCH (or PDCCH candidate / CORESET) and PDSCHs #1 to #4 is greater than or equal to a certain threshold value (for example, timeDurationForQCL), and a TCI field is absent in the DCI.

FIG. 19 shows a case where the specific PDCCH is a PDCCH to be ended later, but the specific PDCCH is not limited to this.

In this case, two QCLs / TCI states of two CORESETs linked to each other with scheduling DCI may be applied to all PDSCHs #1 to #4.

### {Case 3B}

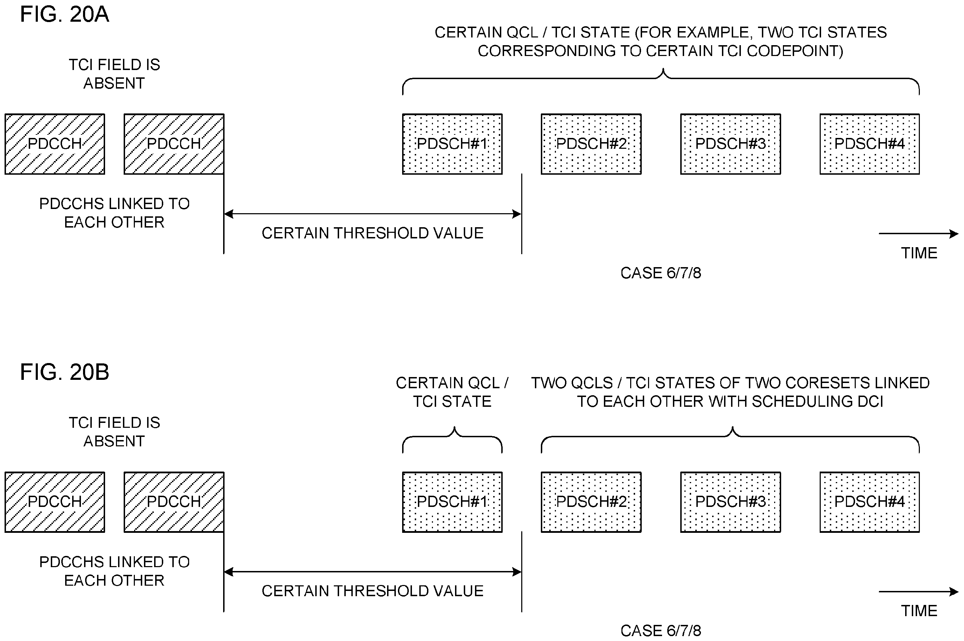

Assume a case where scheduling offset between PDCCH repetition / DCI for scheduling the multi-PDSCH and some PDSCHs (or at least one PDSCH) is less than a certain threshold value and where the DCI does not include a TCI field (see FIGS. 20A and 20B). FIGS. 20A and 20B each shows a case where PDSCHs #1 to #4 are scheduled by the PDCCH repetition (here, two PDCCHs linked to each other), scheduling offset between a specific PDCCH (or PDCCH candidate / CORESET) and PDSCH #1 is less than the certain threshold value, and a TCI field is absent in the DCI. Note that FIGS. 20A and 20B each shows a case where scheduling offset between the specific PDCCH and PDSCHs #2 to #4 is greater than or equal to the certain threshold value.

In such a case, a QCL / TCI state of each PDSCH may be determined based on at least one of Alt. 3B-1 to Alt. 3B-2 below.

### <<Alt. 3B-1>>

A certain QCL / TCI state may be applied to all scheduled PDSCHs #1 to #4 (see FIG. 20A). In other words, the same QCL / TCI state may be applied to all PDSCHs #1 to #4. The certain QCL / TCI state may be two TCI states corresponding to the lowest TCI codepoint of TCI codepoints each including two different TCI states.

In codepoints of the TCI field of the DCI, the UE may control so as to apply, to all PDSCHs #1 to #4, two TCI states corresponding to a codepoint with the lowest value/index, among codepoints each corresponding to two different TCI states.

### <<Alt. 3B-2>>

A first QCL / TCI state may be applied to a first PDSCH, and a second QCL / TCI state may be applied to a second PDSCH (see FIG. 20B).

For example, a certain QCL / TCI state (first QCL / TCI) may be applied to a first PDSCH (here, PDSCH #1) with scheduling offset less than a certain threshold value. The certain QCL / TCI state may be two TCI states corresponding to the lowest TCI codepoint of TCI codepoints each including two different TCI states.

On the other hand, two QCLs / TCI states of two CORESETs linked to each other with scheduling DCI (second QCL / TCI state) may be applied to a second PDSCH (here, PDSCHs #2 to #4) with scheduling offset greater than or equal to the certain threshold value.

### {Case 3C}

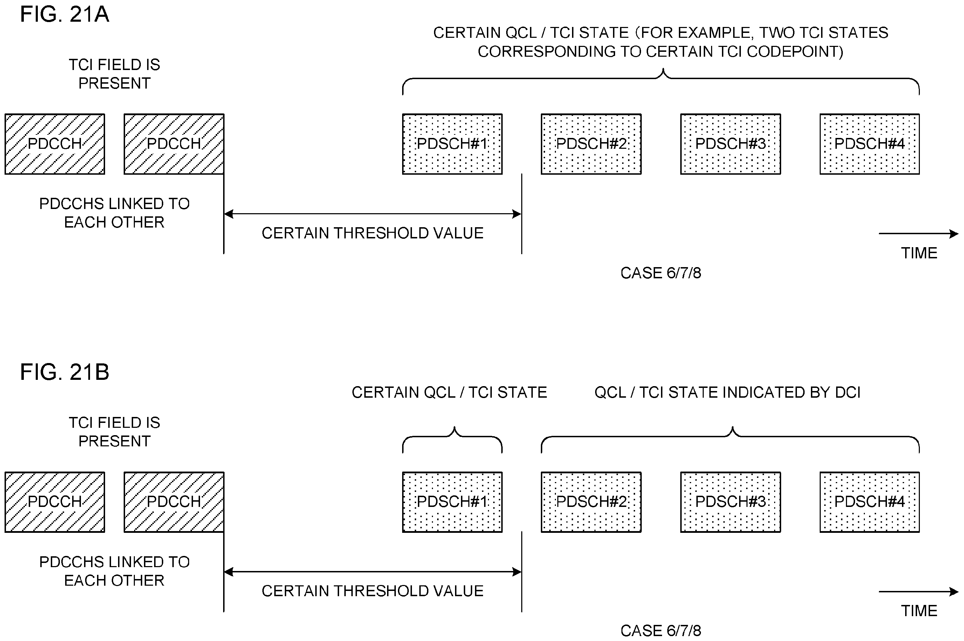

Assume a case where scheduling offset between PDCCH repetition / DCI for scheduling the multi-PDSCH and some PDSCHs (or at least one PDSCH) is less than a certain threshold value and where the DCI includes a TCI field (see FIGS. 21A and 21B). FIGS. 21A and 21B each shows a case where PDSCHs #1 to #4 are scheduled by the PDCCH repetition (here, two PDCCHs linked to each other), scheduling offset between a specific PDCCH (or PDCCH candidate / CORESET) and PDSCH #1 is less than the certain threshold value, and a TCI field is present in the DCI. Note that FIGS. 21A and 21B each shows a case where scheduling offset between the specific PDCCH and PDSCHs #2 to #4 is greater than or equal to the certain threshold value.

In such a case, a QCL / TCI state of each PDSCH may be determined based on at least one of Alt. 3C-1 to Alt. 3C-2 below.

### <<Alt. 3C-1>>

A certain QCL / TCI state may be applied to all scheduled PDSCHs #1 to #4 (see FIG. 21A). In other words, the same QCL / TCI state may be applied to all PDSCHs #1 to #4. The certain QCL / TCI state may be two TCI states corresponding to the lowest TCI codepoint of TCI codepoints each including two different TCI states.

In codepoints of the TCI field of the DCI, the UE may control so as to apply, to all PDSCHs #1 to #4, two TCI states corresponding to a codepoint with the lowest value/index, among codepoints each corresponding to two different TCI states.

### <<Alt. 3C-2>>

A first QCL / TCI state may be applied to a first PDSCH, and a second QCL / TCI state may be applied to a second PDSCH (see FIG. 21B).

For example, a certain QCL / TCI state (first QCL / TCI) may be applied to a first PDSCH (here, PDSCH #1) with scheduling offset less than a certain threshold value. The certain QCL / TCI state may be two TCI states corresponding to the lowest TCI codepoint of TCI codepoints each including two different TCI states.

On the other hand, one or more QCLs / TCI states (second QCL / TCI state) indicated by DCI (for example, a TCI field) may be applied to a second PDSCH (here, PDSCHs #2 to #4) with scheduling offset greater than or equal to the certain threshold value. Two TCI states may be indicated by the TCI field of the DCI.

Note that, as described in case 3B / case 3C, when two QCLs / TCI states are determined, and the two QCLs / TCI states are applied to a plurality of PDSCHs, mapping between a QCL / TCI state and multi-PDSCH may be controlled based on a certain rule.

For example, in case 6, assume a case where two different TCI states are applied to different PDSCHs #1 to #4 (or PDSCHs in different slots). In this case, a first TCI state may be applied to PDSCHs #1 and #3 with odd-numbered indices, and a second TCI state may be applied to PDSCHs #2 and #4 with even-numbered indices (for example, a cyclic mapping pattern). Alternatively, a first TCI state may be applied to PDSCHs #1 and #2 with X (for example, X = 2) consecutive indices, and a second TCI state may be applied to PDSCHs #3 and #4 (for example, a sequential mapping pattern).

In case 7 / case 8, assume a case where two different TCI states are applied to different PDSCHs #1 to #4 (or PDSCHs in different slots). In this case, in case 7, each PDSCH may be associated with two QCLs / TCI states, and a PDSCH scheme for M-TRP TDM/FDM/SDM may be applied to each PDSCH. Alternatively, in case 8, each PDSCH may be associated with two QCLs / TCI states, and an SFN PDSCH scheme may be applied to each

### PDSCH.

The operation described in case 3B / case 3C may be applied/enabled when at least one of a case where a certain higher layer parameter (for example, enableTwoDefaultTCI-States) is configured and a case where at least one TCI codepoint indicating two TCI states is present is satisfied.

The QCL / TCI state determination method (for example, case 3A / case 3B / case 3C) in case 6 / case 7 / case 8 may be applied when scheduling DCI is provided by PDCCH repetition.

### ((Case 9))

Assume a case (case 9) where multi-PDSCH using multi-DCI in multi-TRP is scheduled by using PDCCH repetition. In this case, one QCL may be determined for each PDSCH, depending on a CORESET pool index.

Case 9 corresponds to PDCCH repetition + multi-PDSCH using multi-DCI in multi-TRP (for example, PDCCH repetition + M-DCI M-TRP multi PDSCH).

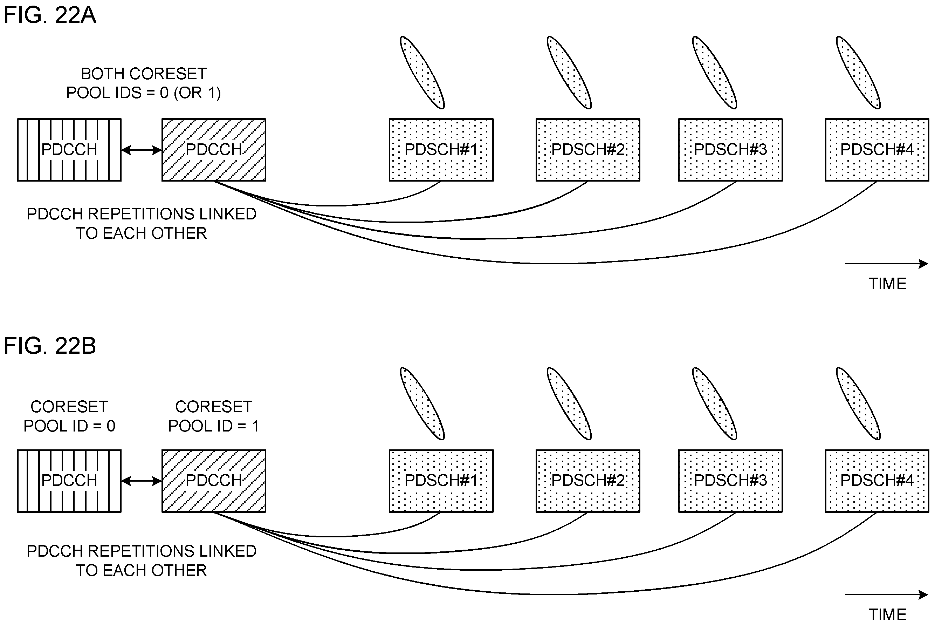

FIGS. 22A and 22B show examples of case 9. FIGS. 22A and 22B show cases where PDCCH repetition (for example, a plurality of PDCCHs (or DCI)) schedules plurality of PDSCHs #1 to #4. Search space sets / CORESETs / PDCCH candidates corresponding to the plurality of respective PDCCHs may be linked to / associated with each other.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

CORESET pool indices corresponding to a plurality of (for example, two) respective search space sets / CORESETs / PDCCH candidates (or a plurality of search space sets / CORESETs / PDCCH candidates linked to each other) for the PDCCH repetition may be configured to be the same value (case 9-1, see FIG. 22A). FIG. 14A shows a case where both CORESET pool indices corresponding to two PDCCHs (or search space sets / CORESETs / PDCCH candidates) linked to each other are set to 0 (or 1).

CORESET pool indices corresponding to a plurality of (for example, two) respective search space sets / CORESETs / PDCCH candidates (or a plurality of search space sets / CORESETs / PDCCH candidates linked to each other) for the PDCCH repetition may be configured to be different values (case 9-2, see FIG. 22B). FIG. 14B shows a case where one of CORESET pool indices corresponding to two PDCCHs (or search space sets / CORESETs / PDCCH candidates) linked to each other and the other are set to 0 and 1, respectively.

The QCL / TCI state determination method (for example, case 1A / case 1B / case 1C) described in the first embodiment may be used for a QCL / TCI state for the multi-PDSCH in case 9 (case 9-1 / case 9-2). In this case, at least one of application example 9-1 to application example 9-3 below may be applied.

### - Application Example 9-1

Case 1A / case 1B (for example, Alt. 1B-2) may, when being applied to case 9, be applied by interpreting, as the QCL / TCI state, the QCL / TCI state applied to the PDSCH with the scheduling offset greater than or equal to the certain threshold value. For example, the QCL / TCI state applied to the PDSCH with the scheduling offset greater than or equal to the certain threshold value may be a QCL / TCI state corresponding to a CORESET with a smaller index, among two CORESETs linked to each other with scheduling DCI.

In other words, in case 9, case 1A / case 1B may be applied by interpreting, as the QCL / TCI state, the QCL / TCI state in case 1A / case 1B (for example, Alt. 1B-2), in consideration of indices of CORESETs each corresponding to PDCCH repetition (or DCI) for scheduling a PDSCH.

Note that case 9 shows a case where a QCL / TCI state corresponding to a CORESET with a smaller index, among CORESETs each corresponding to the PDCCH repetition (or DCI), is applied, but is not limited to this.

For example, a QCL / TCI state corresponding to a CORESET with a larger index, among CORESETs linked to each other and each corresponding to PDCCH repetition (or DCI), may be selected. Alternatively, a QCL / TCI state corresponding to a CORESET having a lower (or higher) CORESET pool index, among the two CORESETs linked to each other, may be selected. Alternatively, a QCL / TCI state corresponding to a CORESET associated with a search space set / PDCCH candidate having a lower (or higher) index, among search space sets / PDCCH candidates linked to each other and each corresponding to PDCCH repetition (or DCI), may be selected. Alternatively, a QCL / TCI state corresponding to a CORESET associated with a PDCCH candidate to be started earlier / started later / ended earlier / ended later, among PDCCH candidates linked to each other and each corresponding to PDCCH repetition (or DCI), may be selected.

### - Application Example 9-2

Alternatively, case 1B (for example, Alt. 1B-1 / Alt. 1B-2) / case 1C (for example, Alt. 1C-1 / Alt. 1C-2) may, when being applied to case 9 (case 9-1 / case 9-2), be applied by interpreting the certain QCL / TCI state as the QCL / TCI state.

For example, the certain QCL / TCI state may be a QCL / TCI state of a CORESET having the lowest CORESET ID, among CORESETs having a CORESET pool index with the same value as that of a PDCCH for scheduling a PDSCH, in the latest slot in which one or more CORESETs associated with the CORESET pool index with the same value as that of the PDCCH for scheduling a PDSCH in an active BWP of a serving cell are monitored by the UE (CORESET with the lowest CORESETID among the CORESETs with same value of CORESETPoolIndex as the PDCCH scheduling the PDSCH in the latest slot in which one or more CORESETs associated with the same value of CORESETPoolIndex as the PDCCH scheduling that PDSCH within the active BWP of the serving cell are monitored by the UE).

In other words, in case 9, case 1B / case 1C may be applied by interpreting, as the QCL / TCI state, the certain QCL / TCI state in case 1B (for example, Alt. 1B-1 / Alt. 1B-2) / case 1C (for example, Alt. 1C-1 / Alt. 1C-2), in consideration of a CORESET pool index corresponding to a PDCCH for scheduling a PDSCH.

Application example 2 in case 9 may be applied/enabled when two PDCCH repetitions are associated with the same CORESET pool index.

### - Application Example 9-3

Alternatively, case 1B (for example, Alt. 1B-1 / Alt. 1B-2) / case 1C (for example, Alt. 1C-1 / Alt. 1C-2) may, when being applied to case 9 (case 9-1 / case 9-2), be applied by interpreting the certain QCL / TCI state as the QCL / TCI state.

For example, the certain QCL / TCI state may be a QCL / TCI state of a CORESET having the lowest CORESET ID, among CORESETs having CORESET pool index 0, in the latest slot in which one or more CORESETs associated with CORESET pool index 0 in an active BWP of a serving cell are monitored by the UE (CORESET with lowest CORESETID among the CORESETs with CORESETPoolIndex=0 in the latest slot in which one or more CORESETs associated with CORESETPoolIndex=0 within the active BWP of the serving cell are monitored by the UE).

In other words, in case 9, case 1B / case 1C may be applied by interpreting, as the QCL / TCI state, the certain QCL / TCI state in case 1B (for example, Alt. 1B-1 / Alt. 1B-2) / case 1C (for example, Alt. 1C-1 / Alt. 1C-2), in consideration of a CORESET having a specific CORESET pool index. Note that case 9 shows a case where 0 is selected as the specific CORESET pool index, but is not limited to this, and CORESET pool index 1 may be selected.

Application example 3 in case 9 may be applied/enabled when two PDCCH repetitions are associated with different CORESET pool indices.

In case 9, the QCL / TCI state determination method (for example, case 1A / case 1B / case 1C) described in the first embodiment may be applied/enabled in at least one of a case where scheduling DCI is provided by PDCCH repetition and a case where a certain higher layer parameter (for example, enableDefaultTCI-StatePerCoresetPoolIndex) is configured.

### ((Case 10))

Assume a case (case 10) where multi-PDSCH in a single TRP is scheduled by using an SFN PDCCH. In this case, one QCL may be determined for each PDSCH.

Case 10 corresponds to multi-PDSCH using an SFN PDCCH in a single TRP (for example, SFN PDCCH + S-TRP multi PDSCH).

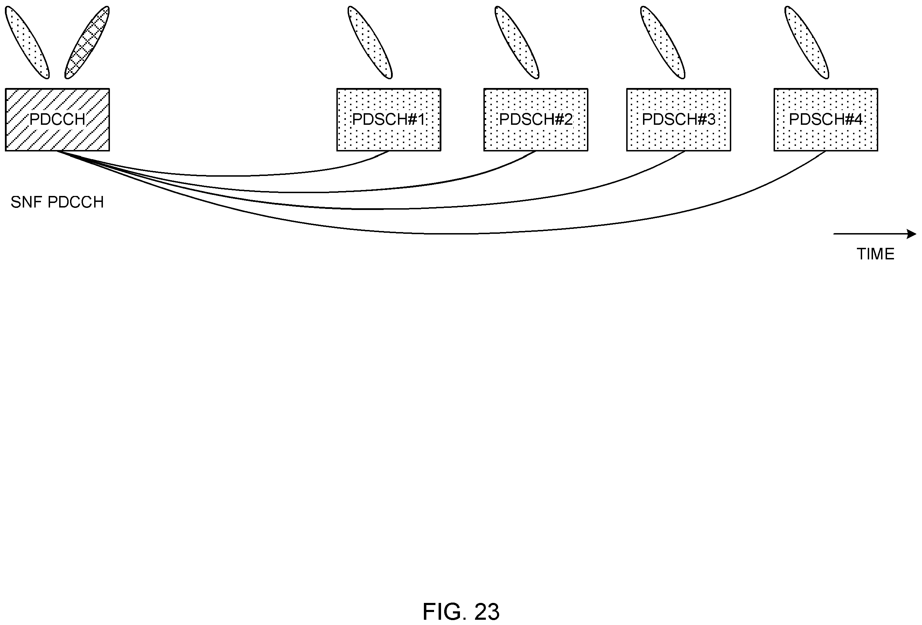

FIG. 23 shows an example of case 10. FIG. 23 shows a case where the SFN PDCCH schedules plurality of PDSCHs #1 to #4.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

For a CORESET corresponding to the SFN PDCCH, two TCI states / QCLs may be configured/indicated.

The QCL / TCI state determination method (for example, case 1A / case 1B / case 1C) described in the first embodiment may be used for a QCL / TCI state for the multi-PDSCH in case 10. In this case, at least one of application example 10-1 to application example 10-2 below may be applied.

### - Application Example 10-1

Case 1A / case 1B (for example, Alt. 1B-2) may, when being applied to case 10, be applied by interpreting, as the QCL / TCI state, the QCL / TCI state applied to the PDSCH with the scheduling offset greater than or equal to the certain threshold value. For example, the QCL / TCI state applied to the PDSCH with the scheduling offset greater than or equal to the certain threshold value may be one of two QCLs / TCI states of scheduling DCI.

One of the two QCLs / TCI states may be a first TCI state / second TCI state or a TCI state with a higher index / TCI state with a lower index.

In other words, in case 10, case 1A / case 1B may be applied by interpreting, as the QCL / TCI state, the QCL / TCI state in case 1A / case 1B (for example, Alt. 1B-2), in consideration of a specific (or one) QCL / TCI state corresponding to an SFN PDCCH (or DCI) for scheduling a PDSCH.

Application example 10-1 in case 10 may be applied only when scheduling DCI is provided by an SFN PDCCH.

### - Application Example 10-2

Alternatively, case 1B (for example, Alt. 1B-1 / Alt. 1B-2) / case 1C (for example, Alt. 1C-1 / Alt. 1C-2) may, when being applied to case 10, be applied by interpreting the certain QCL / TCI state as the QCL / TCI state.

For example, the certain QCL / TCI state may be one of two QCLs / TCI states of a CORESET having the lowest CORESET ID in the latest slot in which one or more CORESETs in an active BWP of a serving cell are monitored by the UE (one of the two TCI states / QCLs of the CORESET with the lowest CORESETID in the latest slot in which one or more CORESETs within the active BWP of the serving cell are monitored by the UE) .

One of the two QCLs / TCI states may be a first TCI state / second TCI state or a TCI state with a higher index / TCI state with a lower index.

In other words, in case 10, case 1B / case 1C may be applied by interpreting, as the QCL / TCI state, the certain QCL / TCI state in case 1B (for example, Alt. 1B-1 / Alt. 1B-2) / case 1C (for example, Alt. 1C-1 / Alt. 1C-2), in consideration of one of two QCLs / TCI states corresponding to a CORESET with a lower index. Note that case 10 shows a case where the CORESET with the lower index is selected, but is not limited to this, and a CORESET with a higher index may be selected.

Application example 10-2 in case 10 may be applied only when a CORESET having the lowest CORESET ID in the latest slot in which one or more CORESETs in an active BWP of a serving cell are monitored by the UE corresponds to an SFN PDCCH.

### ((Case 11 / Case 12 / Case 13))

Assume a case (case 11 / case 12) where multi-PDSCH using single DCI in multi-TRP is scheduled by using an SFN PDCCH or a case (case 13) where multi-PDSCH using an SFN is scheduled by using an SFN PDCCH. In this case, two QCLs / TCI states may be determined, and the two QCLs / TCI states may be applied to a plurality of PDSCHs.

Case 11 corresponds to SFN PDCCH + multi-PDSCH using single DCI (scheme 1) in multi-TRP (for example, SFN PDCCH + S-DCI M-TRP multi PDSCH (scheme 1)).

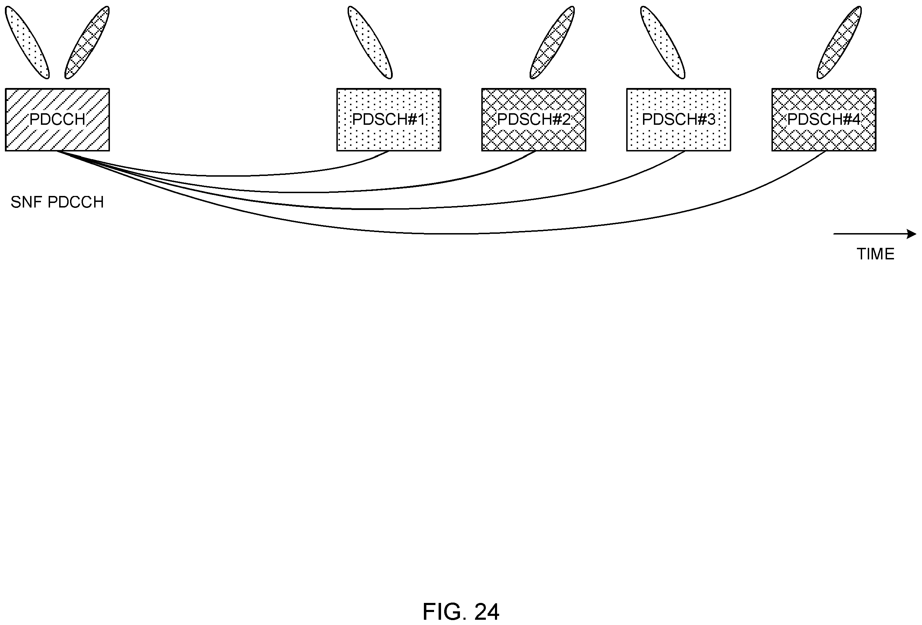

FIG. 24 shows an example of case 11. FIG. 24 shows a case where the SFN PDCCH schedules plurality of PDSCHs #1 to #4.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots. A first TCI state may correspond to some PDSCHs of plurality of PDSCHs #1 to #4 (here, PDSCHs #1 and #3), and a second TCI state may correspond to the other PDSCHs (here, PDSCHs #2 and #4) .

Case 12 corresponds to SNF PDCCH + multi-PDSCH using single DCI (scheme 2) in multi-TRP (for example, SFN PDCCH + S-DCI M-TRP multi PDSCH (scheme 2)).

Case 13 corresponds to an SFN PDCCH and multi-PDSCH using an SFN (for example, SFN PDCCH + SFN multi-PDSCH).

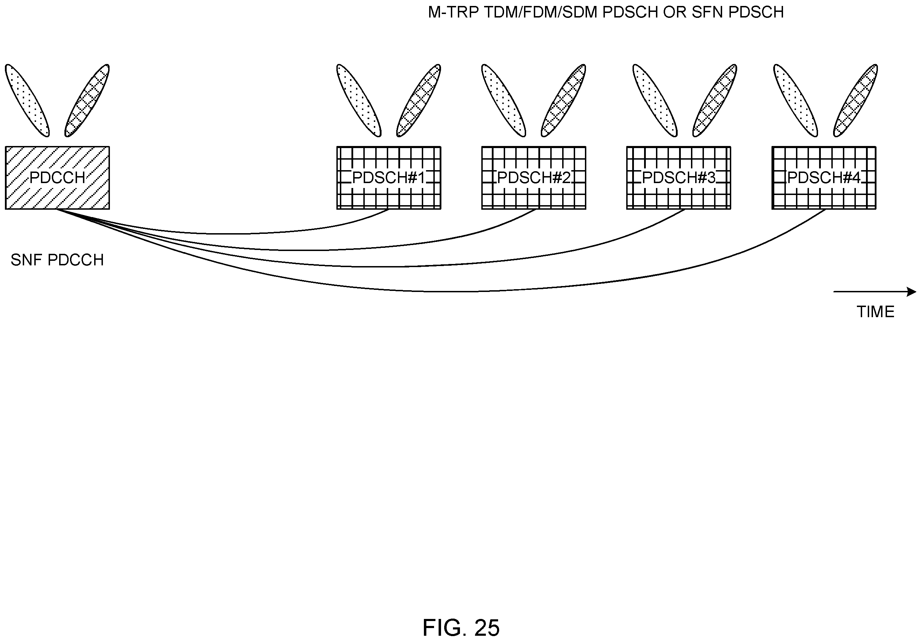

FIG. 25 shows an example of case 12 / case 13. FIG. 25 shows a case where the SFN PDCCH schedules plurality of PDSCHs #1 to #4. Search space sets / CORESETs / PDCCH candidates each corresponding to the SFN PDCCH may be linked to / associated with each other.

Plurality of PDSCHs #1 to #4 may correspond to different TBs (or CWs). The plurality of PDSCHs (or PDSCHs corresponding to different TBs) may be transmitted by using different time intervals (for example, slots). In other words, the plurality of PDSCHs may be transmitted by using a plurality of slots.

In case 12, reception from multi-TRP (M-TRP repetition) may be performed. In this case, PDSCHs in a certain slot (for example, PDSCHs corresponding to the same TB) may be transmitted from a plurality of TRPs. Different TCI states / QCLs may be applied to the PDSCHs transmitted from the respective TRPs. For example, two QCLs / TCI states may be determined, and may be applied to the plurality of PDSCHs. Each PDSCH may be associated with two QCLs / TCI states, and a multi-TRP scheme (for example, M-TRP TDM/FDM/SDM) may be applied to each PDSCH. The UE may control so as to perform, for one or more PDSCHs transmitted in a certain slot, reception by using one or more TCI states (for example, a first TCI state and a second TCI state).

In case 13, PDSCHs #1 to #4 may each be associated with two TCI states / QCLs, and may be configured/indicated as an SFN PDSCH scheme. For example, two QCLs / TCI states may be determined, and may be applied to the plurality of PDSCHs. Each PDSCH may be associated with two QCLs / TCI states, and an SFN PDSCH scheme may be applied to each PDSCH. The UE may control so as to perform, for one or more PDSCHs transmitted in a certain slot, reception by using one or more TCI states (for example, a first TCI state and a second TCI state).

The QCL / TCI state determination method (for example, case 2A / case 2B / case 2C) described in case 1 / case 2 / case 3 may be used for a QCL / TCI state for the multi-PDSCH in case 11 / case 12 / case 13.

For example, case 2A / case 2B (for example, Alt. 2B-2) may, when being applied to case 11 / case 12 / case 13, be applied by interpreting, as the QCL / TCI state, the QCL / TCI state applied to the PDSCH with the scheduling offset greater than or equal to the certain threshold value. For example, the QCL / TCI state applied to the PDSCH with the scheduling offset greater than or equal to the certain threshold value may be two QCLs / TCI states of scheduling DCI. The two QCLs / TCI states of the scheduling DCI may be interpreted as two QCLs / TCI states of a PDCCH corresponding to the scheduling DCI, or two QCLs / TCI states of a CORESET corresponding to the scheduling DCI.

In other words, in case 11 / case 12 / case 13, case 2A / case 2B may be applied by interpreting, as the QCL / TCI state, the QCL / TCI state in case 2A / case 2B (for example, Alt. 2B-2), in consideration of two QCLs / TCI states corresponding to an SFN PDCCH (or DCI) for scheduling a PDSCH. The interpretation may be applied/enabled when scheduling DCI is provided by an SFN PDCCH.

For example, a QCL / TCI state for the multi-PDSCH in case 11 / case 12 / case 13 may be determined based on at least one of case 4A, case 4B, and case 4C below.

### {Case 4A}

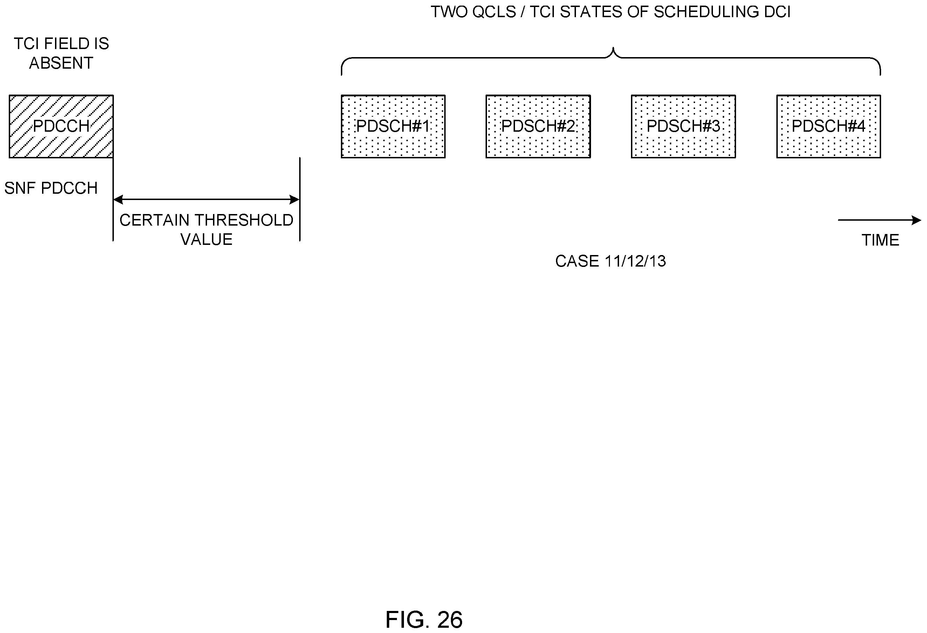

Assume a case where scheduling offset between an SFN PDCCH / DCI for scheduling the multi-PDSCH and all PDSCHs is greater than or equal to a certain threshold value and where the DCI does not include a TCI field (see FIG. 26). FIG. 26 shows a case where PDSCHs #1 to #4 are scheduled by an SFN PDCCH, scheduling offset between the SFN PDCCH and PDSCHs #1 to #4 is greater than or equal to a certain threshold value (for example, timeDurationForQCL), and a TCI field is absent in the DCI.

In this case, two QCLs / TCI states of scheduling DCI may be applied to all PDSCHs #1 to #4.

### {Case 4B}

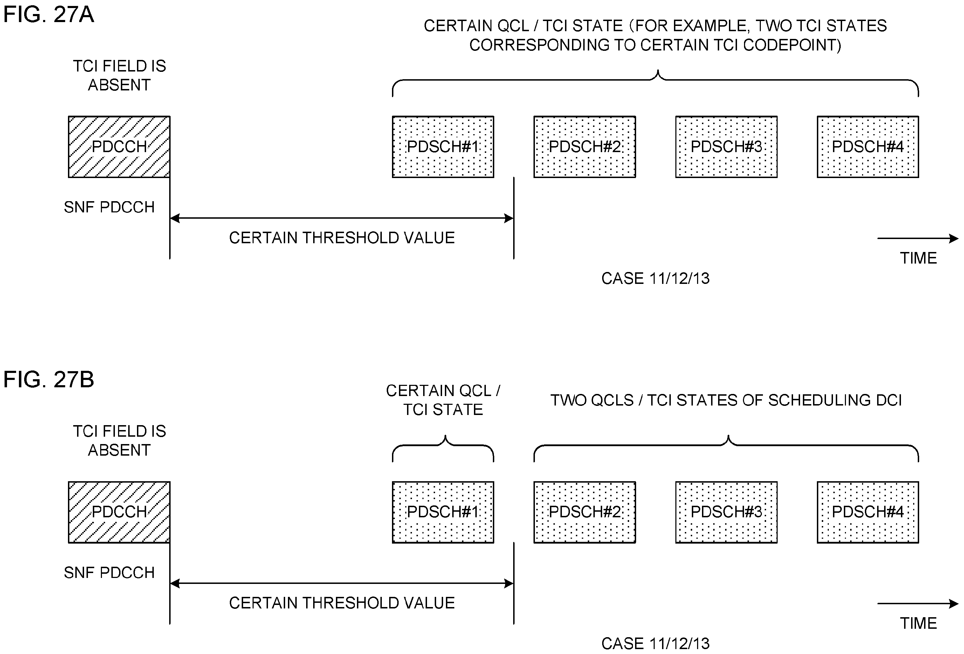

Assume a case where scheduling offset between an SFN PDCCH / DCI for scheduling the multi-PDSCH and some PDSCHs (or at least one PDSCH) is less than a certain threshold value and where the DCI does not include a TCI field (see FIGS. 27A and 27B). FIGS. 27A and 27B each shows a case where PDSCHs #1 to #4 are scheduled by an SFN PDCCH, scheduling offset between the SFN PDCCH and PDSCH #1 is less than a certain threshold value, and a TCI field is absent in the DCI. Note that FIGS. 27A and 27B each shows a case where scheduling offset between the SFN PDCCH and PDSCHs #2 to #4 is greater than or equal to the certain threshold value.

In such a case, a QCL / TCI state of each PDSCH may be determined based on at least one of Alt. 4B-1 to Alt. 4B-2 below.

### <<Alt. 4B-1>>

A certain QCL / TCI state may be applied to all scheduled PDSCHs #1 to #4. In other words, the same QCL / TCI state may be applied to all PDSCHs #1 to #4 (see FIG. 27A). The certain QCL / TCI state may be two TCI states corresponding to the lowest TCI codepoint of TCI codepoints each including two different TCI states.

In codepoints of the TCI field of the DCI, the UE may control so as to apply, to all PDSCHs #1 to #4, two TCI states corresponding to a codepoint with the lowest value/index, among codepoints each corresponding to two different TCI states.

### <<Alt. 4B-2>>

A first QCL / TCI state may be applied to a first PDSCH, and a second QCL / TCI state may be applied to a second PDSCH (see FIG. 27B).

For example, a certain QCL / TCI state (first QCL / TCI) may be applied to a first PDSCH (here, PDSCH #1) with scheduling offset less than a certain threshold value. The certain QCL / TCI state may be two TCI states corresponding to the lowest TCI codepoint of TCI codepoints each including two different TCI states.

On the other hand, two QCLs / TCI states (second QCL / TCI state) of scheduling DCI (or PDCCH/CORESET) may be applied to a second PDSCH (here, PDSCHs #2 to #4) with scheduling offset greater than or equal to the certain threshold value.

### {Case 4C}

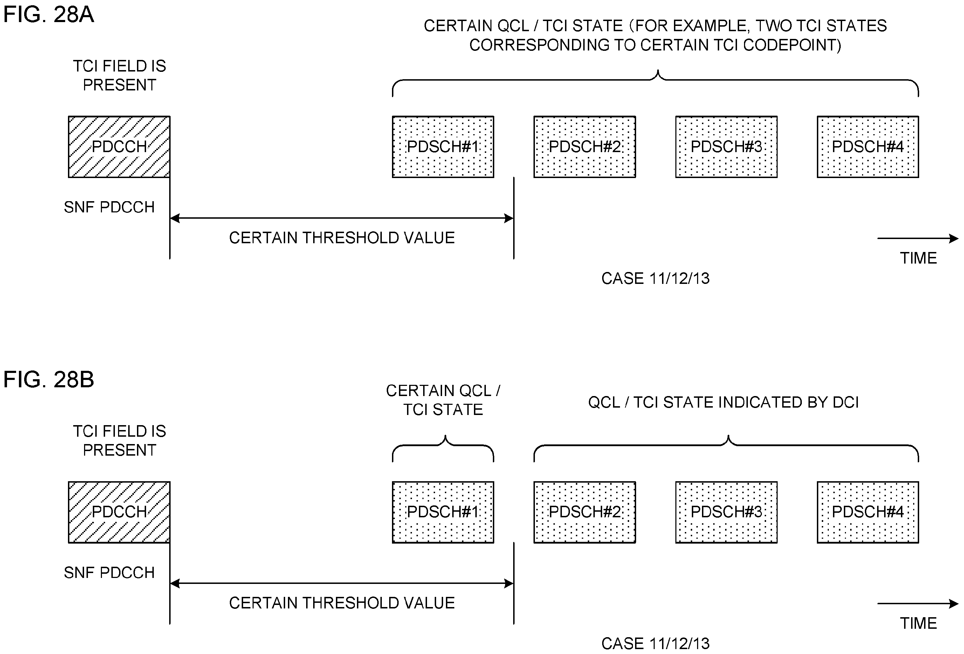

Assume a case where scheduling offset between an SFN PDCCH / DCI for scheduling the multi-PDSCH and some PDSCHs (or at least one PDSCH) is less than a certain threshold value and where the DCI includes a TCI field (see FIGS. 28A and 28B). FIGS. 28A and 28B each shows a case where PDSCHs #1 to #4 are scheduled by an SFN PDCCH, scheduling offset between the SFN PDCCH and PDSCH #1 is less than a certain threshold value, and a TCI field is present in the DCI. Note that FIGS. 28A and 28B each shows a case where scheduling offset between the SFN PDCCH and PDSCHs #2 to #4 is greater than or equal to the certain threshold value.

In such a case, a QCL / TCI state of each PDSCH may be determined based on at least one of Alt. 4C-1 to Alt. 4C-2 below.

### <<Alt. 4C-1>>

A certain QCL / TCI state may be applied to all scheduled PDSCHs #1 to #4 (see FIG. 28A). In other words, the same QCL / TCI state may be applied to all PDSCHs #1 to #4. The certain QCL / TCI state may be two TCI states corresponding to the lowest TCI codepoint of TCI codepoints each including two different TCI states.

In codepoints of the TCI field of the DCI, the UE may control so as to apply, to all PDSCHs #1 to #4, two TCI states corresponding to a codepoint with the lowest value/index, among codepoints each corresponding to two different TCI states.

### «Alt. 4C-2»

A first QCL / TCI state may be applied to a first PDSCH, and a second QCL / TCI state may be applied to a second PDSCH (see FIG. 28B).

For example, a certain QCL / TCI state (first QCL / TCI) may be applied to a first PDSCH (here, PDSCH #1) with scheduling offset less than a certain threshold value. The certain QCL / TCI state may be two TCI states corresponding to the lowest TCI codepoint of TCI codepoints each including two different TCI states.

On the other hand, one or more QCLs / TCI states (second QCL / TCI state) indicated by DCI (for example, a TCI field) may be applied to a second PDSCH (here, PDSCHs #2 to #4) with scheduling offset greater than or equal to the certain threshold value. Two TCI states may be indicated by the TCI field of the DCI.

Note that, as described in case 4B / case 4C, when two QCLs / TCI states are determined, and the two QCLs / TCI states are applied to a plurality of PDSCHs, mapping between a QCL / TCI state and multi-PDSCH may be controlled based on a certain rule.

For example, in case 11, assume a case where two different TCI states are applied to different PDSCHs #1 to #4 (or PDSCHs in different slots). In this case, a first TCI state may be applied to PDSCHs #1 and #3 with odd-numbered indices, and a second TCI state may be applied to PDSCHs #2 and #4 with even-numbered indices (for example, a cyclic mapping pattern). Alternatively, a first TCI state may be applied to PDSCHs #1 and #2 with X (for example, X = 2) consecutive indices, and a second TCI state may be applied to PDSCHs #3 and #4 (for example, a sequential mapping pattern).

In case 12 / case 13, assume a case where two different TCI states are applied to different PDSCHs #1 to #4 (or PDSCHs in different slots). In this case, in case 2, each PDSCH may be associated with two QCLs / TCI states, and a PDSCH scheme for M-TRP TDM/FDM/SDM may be applied to each PDSCH. Alternatively, in case 3, each PDSCH may be associated with two QCLs / TCI states, and an SFN PDSCH scheme may be applied to each

### PDSCH.

The operation described in case 4B / case 4C may be applied/enabled when at least one of a case where a certain higher layer parameter (for example, enableTwoDefaultTCI-States) is configured and a case where at least one TCI codepoint indicating two TCI states is present is satisfied.

The QCL / TCI state determination method (for example, case 4A / case 4B / case 4C) in case 11 / case 12 / case 13 may be applied when scheduling DCI is provided by an SFN PDCCH.

### (UE Capability Information)

In the above first embodiment (for example, case 0) / second embodiment (for example, case 1 to case 13), a UE capability below may be configured. Note that the UE capability below may be interpreted as a parameter (for example, a higher layer parameter) configured for the UE from a network (for example, the base station).

UE capability information related to whether to support each case mentioned above (for example, at least one of case 0 to case 13) may be defined. For example, UE capability information related to whether to support a case where a PDCCH is PDCCH repetition may be defined. UE capability information related to whether to support a case where a PDCCH is an SFN PDCCH may be defined.

UE capability information related to whether to support a default QCL for each CORESET pool index for multi-PDSCH using multi-DCI in multi-TRP may be defined. For example, UE capability information related to whether to support a case where a PDCCH is PDCCH repetition may be defined.

UE capability information related to whether the UE supports first subcarrier spacing (SCS) / second subcarrier spacing may be defined. The first subcarrier spacing may be, for example, 480 kHz, and the second subcarrier spacing may be, for example, 960 kHz.

UE capability information related to whether the UE supports operation in a certain frequency range (or a frequency exceeding a certain frequency) may be defined. The certain frequency range may be, for example, 52.6 GHz to 71 GHz. Alternatively, the certain frequency range may be, for example, FR2-2 (or FR2). The certain frequency may be, for example, 52.6 GHz).

Note that the subcarrier spacing (for example, the first subcarrier spacing / second subcarrier spacing) may not be defined as the UE capability, and the presence or absence of application of the above embodiment may be determined depending on whether the UE operates in the subcarrier spacing.

Alternatively, the certain frequency range may not be defined as the UE capability, and the presence or absence of application of the above embodiment may be determined depending on whether the UE operates in the certain frequency range.

The above embodiment may be applied to the UE that supports/reports at least one of the above-mentioned UE capabilities. Alternatively, the above embodiment may be applied to the UE configured from the network.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

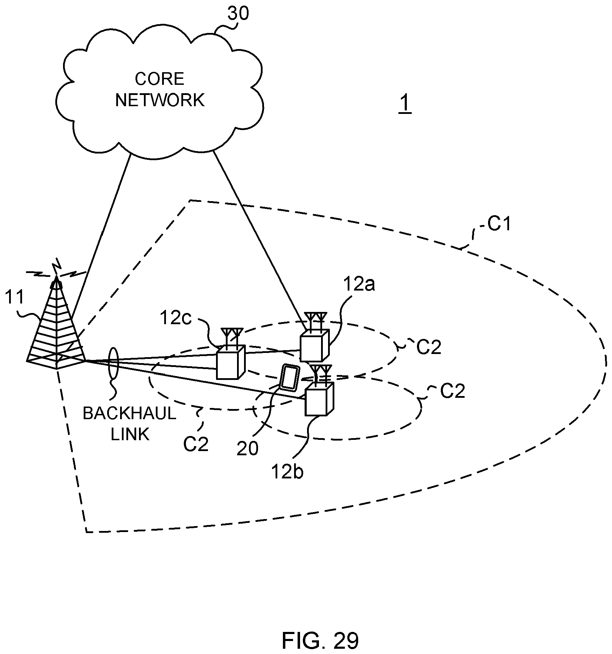

FIG. 29 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

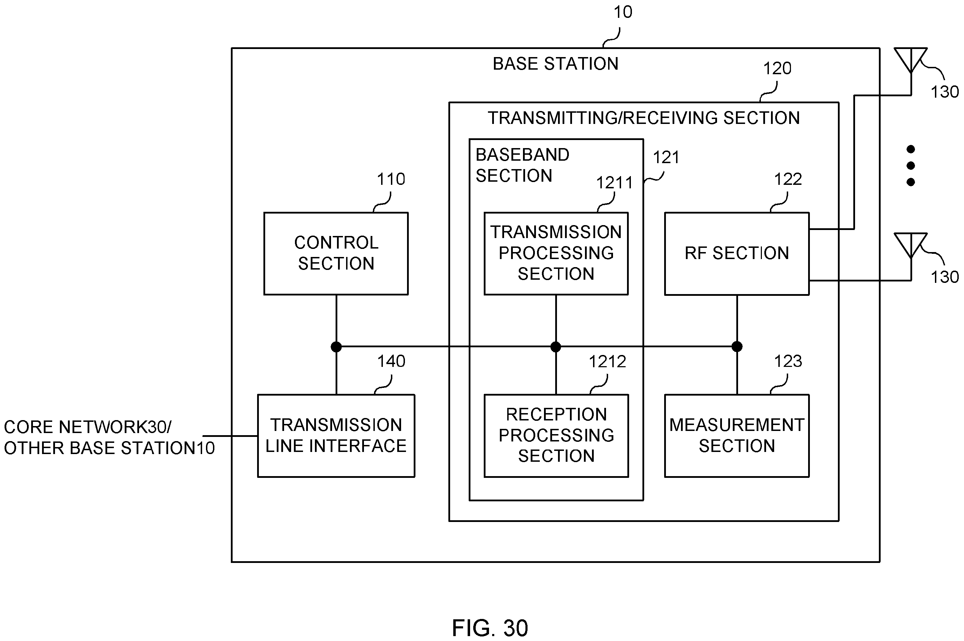

FIG. 30 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a downlink control channel for transmitting downlink control information for scheduling a plurality of downlink shared channels. The control section 110 may control, based on whether offset between the downlink control channel and at least one of the plurality of downlink shared channels is less than a certain threshold value, at least one of a quasi-co-location (QCL) and a transmission configuration indication (TCI) state corresponding to the plurality of respective downlink shared channels.

When at least one codepoint of a transmission configuration indication (TCI) notification field configured in the downlink control information indicates a plurality of TCI states, the control section 110 may control, based on whether offset between the downlink control channel and at least one of the plurality of downlink shared channels is less than a certain threshold value, at least one of a quasi-co-location (QCL) and a TCI state corresponding to the plurality of respective downlink shared channels.

When a plurality of control resource set pool indices corresponding to the downlink control channel are configured, the control section 110 may control, based on whether offset between the downlink control channel and at least one of the plurality of downlink shared channels is less than a certain threshold value, at least one of a quasi-co-location (QCL) and a TCI state corresponding to the plurality of respective downlink shared channels.

### (User Terminal)

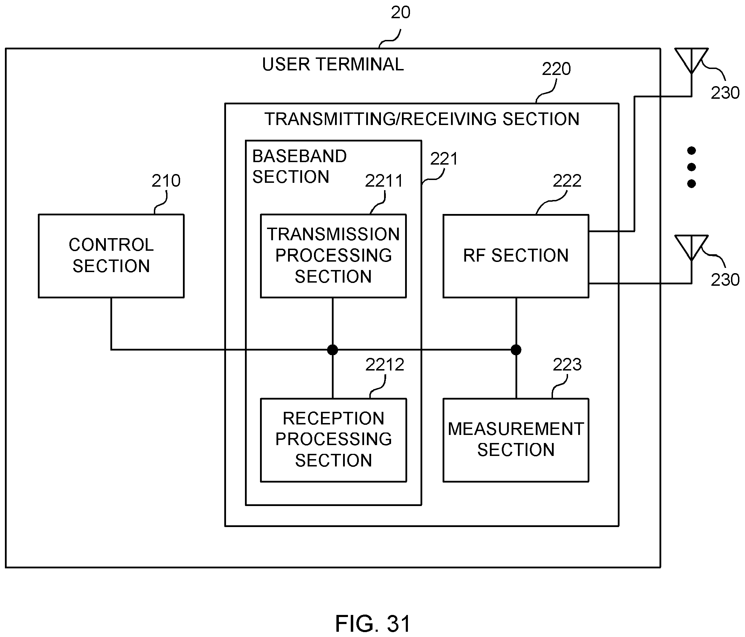

FIG. 31 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a downlink control channel for transmitting downlink control information for scheduling a plurality of downlink shared channels.

The control section 210 may judge, based on whether offset between the downlink control channel and at least one of the plurality of downlink shared channels is less than a certain threshold value, at least one of a quasi-co-location (QCL) and a transmission configuration indication (TCI) state corresponding to the plurality of respective downlink shared channels. The control section 210 may judge that when offset between the downlink control channel and a part of the plurality of downlink shared channels is less than the threshold value, at least one of a same QCL and a same TCI state corresponds to the plurality of downlink shared channels. The control section 210 may judge that when offset between the downlink control channel and a part of the plurality of downlink shared channels is less than the threshold value, at least one of different QCLs and different TCI states corresponds to the part of the plurality of downlink shared channels and another channel. When the downlink control channel for transmitting the downlink control information is repetitively transmitted, the control section 210 may judge, based on at least one of a QCL and a TCI state of a control resource set corresponding to a specific downlink control channel, at least one of a QCL and a TCI state corresponding to at least one of the plurality of downlink shared channels.

When at least one codepoint of a transmission configuration indication (TCI) notification field configured in the downlink control information indicates a plurality of TCI states, the control section 210 may judge, based on whether offset between the downlink control channel and at least one of the plurality of downlink shared channels is less than a certain threshold value, at least one of a quasi-co-location (QCL) and a TCI state corresponding to the plurality of respective downlink shared channels. When the offset between the downlink control channel and at least one of the plurality of downlink shared channels is less than the threshold value, the control section 210 may apply, to at least one of the plurality of downlink shared channels, two TCI states capable of being indicated by a specific codepoint of the notification field. When the downlink control channel for transmitting the downlink control information is repetitively transmitted, the control section 210 may apply, to downlink shared channels with offset from the downlink control channel greater than or equal to the threshold value, among the plurality of downlink shared channels, a plurality of QCLs or a plurality of TCI states corresponding to the respective downlink control channels transmitted repetitively. When the downlink control channel for transmitting the downlink control information is transmitted by a single frequency network, the control section 210 may apply, to downlink shared channels with offset from the downlink control channel greater than or equal to the threshold value, among the plurality of downlink shared channels, a plurality of QCLs or a plurality of TCI states corresponding to the downlink control information.

When a plurality of control resource set pool indices corresponding to the downlink control channel are configured, the control section 210 may judge, based on whether offset between the downlink control channel and at least one of the plurality of downlink shared channels is less than a certain threshold value, at least one of a quasi-co-location (QCL) and a TCI state corresponding to the plurality of respective downlink shared channels. When the offset between the downlink control channel and at least one of the plurality of downlink shared channels is less than the threshold value, the control section 210 may apply, to at least one of the plurality of downlink shared channels, at least one of a QCL and a TCI state corresponding to a specific control resource set of control resource sets having a same index as a control resource set pool index corresponding to the downlink control channel. When the downlink control channel for transmitting the downlink control information is repetitively transmitted, the control section 210 may apply, to downlink shared channels with the offset from the downlink control channel greater than or equal to the threshold value, among the plurality of downlink shared channels. at least one of a QCL and a TCI state corresponding to a control resource set of a specific downlink control channel of the downlink control channels transmitted repetitively. When the downlink control channel for transmitting the downlink control information is repetitively transmitted, and the offset between the downlink control channel and at least one of the plurality of downlink shared channels is less than the threshold value, the control section 210 may apply, to downlink shared channels with the offset from the downlink control channel greater than or equal to the threshold value, among the plurality of downlink shared channels. at least one of a QCL and a TCI state corresponding to a specific control resource set having a specific control resource set pool index.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

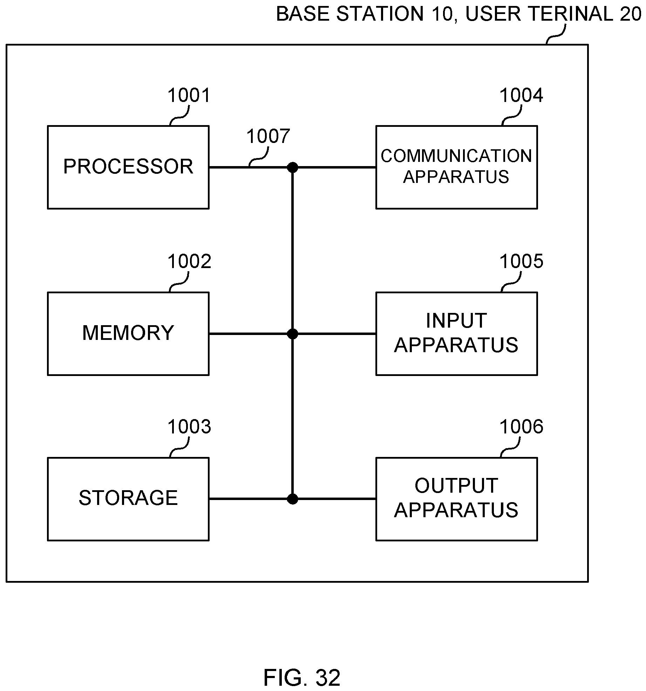

For example, a base station, a user terminal, and so on according to one embodiment of the present disclosure may function as a computer that executes the processes of the radio communication method of the present disclosure. FIG. 32 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

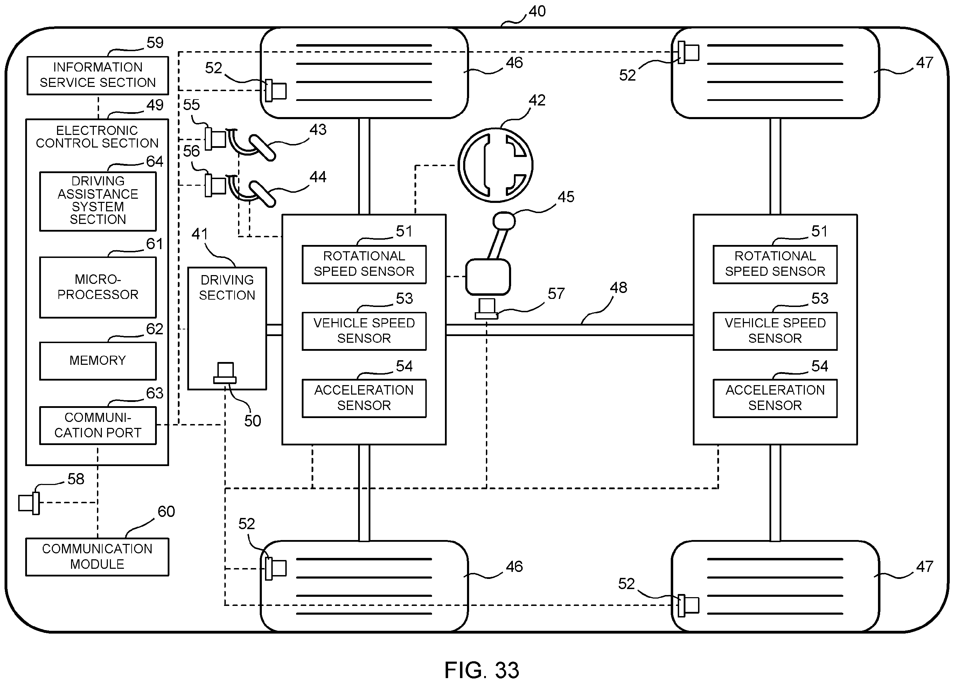

FIG. 33 is a diagram to show an example of a vehicle according to one embodiment. As shown in FIG. 33, a vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the above-described various sensors 50 to 58 input to the electronic control section 49 and information obtained based on the signals, to the external apparatus via radio communication.

The communication module 60 receives various pieces of information (traffic information, signal information, inter-vehicle distance information, and the like) transmitted from the external apparatus, and displays the various pieces of information on the information service section 59 included in the vehicle. The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a downlink control channel for transmitting downlink control information for scheduling a plurality of downlink shared channels; and
a control section that, when a plurality of control resource set pool indices corresponding to the downlink control channel are configured, judges at least one of a quasi-co-location (QCL) and a TCI state corresponding to the plurality of respective downlink shared channels, based on whether offset between the downlink control channel and at least one of the plurality of downlink shared channels is less than a certain threshold value.

2. The terminal according to claim 1, wherein
when the offset between the downlink control channel and at least one of the plurality of downlink shared channels is less than the threshold value, the control section applies, to at least one of the plurality of downlink shared channels, at least one of a QCL and a TCI state corresponding to a specific control resource set of control resource sets having a same index as a control resource set pool index corresponding to the downlink control channel.

3. The terminal according to claim 1, wherein
when the downlink control channel for transmitting the downlink control information is repetitively transmitted, the control section applies, to downlink shared channels with the offset from the downlink control channel greater than or equal to the threshold value, among the plurality of downlink shared channels. at least one of a QCL and a TCI state corresponding to a control resource set of a specific downlink control channel of the downlink control channels transmitted repetitively.

4. The terminal according to claim 1, wherein
when the downlink control channel for transmitting the downlink control information is repetitively transmitted, and the offset between the downlink control channel and at least one of the plurality of downlink shared channels is less than the threshold value, the control section applies, to downlink shared channels with the offset from the downlink control channel greater than or equal to the threshold value, among the plurality of downlink shared channels. at least one of a QCL and a TCI state corresponding to a specific control resource set having a specific control resource set pool index.

5. A radio communication method for a terminal, the radio communication method comprising:
receiving a downlink control channel for transmitting downlink control information for scheduling a plurality of downlink shared channels; and
judging, when a plurality of control resource set pool indices corresponding to the downlink control channel are configured, at least one of a quasi-co-location (QCL) and a TCI state corresponding to the plurality of respective downlink shared channels, based on whether offset between the downlink control channel and at least one of the plurality of downlink shared channels is less than a certain threshold value.

6. A base station comprising:
a transmitting section that transmits a downlink control channel for transmitting downlink control information for scheduling a plurality of downlink shared channels; and
a control section that, when a plurality of control resource set pool indices corresponding to the downlink control channel are configured, controls at least one of a quasi-co-location (QCL) and a TCI state corresponding to the plurality of respective downlink shared channels, based on whether offset between the downlink control channel and at least one of the plurality of downlink shared channels is less than a certain threshold value.
